# EUROPEAN PATENT SPECIFICATION

(11) **EP 1 378 783 B1**
(45) Date of publication and mention of the grant of the patent: **25.05.2005**
(21) Application number: 01915430.1
(22) Date of filing: 19.03.2001
(51) Int. Cl.: G02B 27/22, H04N 13/04

(54) **SYSTEM FOR REPRODUCING THREE-DIMENSIONAL IMAGES**
SYSTEM ZUR WIEDERGABE DREIDIMENSIONALER BILDER
SYSTEME DE REPRODUCTION D'IMAGES EN TROIS DIMENSIONS

(43) Date of publication of application: 07.01.2004
(73) Proprietor: Dominguez-Montes, Juan, 28230 Las Rozas-Madrid (ES)
(72) Inventor: Dominguez-Montes, Juan, 28230 Las Rozas-Madrid (ES)
(74) Representative: Gomez-Acebo, Ignacio
(86) International application number: PCT/ES2001/000109
(87) International publication number: WO 2002/075434

(56) References cited:
- EP-A- 0 114 406
- EP-A- 0 576 106
- EP-A- 0 653 891
- EP-A- 0 656 555
- WO-A-97/45762
- GB-A- 2 266 428
- GB-A- 2 272 597

## Description

### OBJECT OF THE INVENTION

The present invention describes a system that is capable of reproducing images in three dimensions, that is, stereoscopic, three-dimensional or integral, without the need for glasses, nor any other device in front of the observer's eyes.

### BACKGROUND OF THE INVENTION

Independently of systems developed from 1947, based on the production of images through the coherent interference of light beams called holographic systems, the other systems, including that described in the present invention, are to be classified in one of the following groups: stereoscopic, three-dimensional and integral.

The term "stereoscopic" is used here to designate systems which use only two different images in the reproduction, one for each eye.

The term "three-dimensional" is used to designate systems which use more than two images in the reproduction and which allow observation with parallax within a wide range of horizontal vision, without observers having to be bothered by placing any device in front of their eyes.

The term "integral" is used to designate systems which use a large number of images in the reproduction, thus allowing observation with horizontal and vertical parallax within a wide range of vision.

Most of the systems marketed up to the present time in film projection belong to the "stereoscopic" group.

In these systems two single images are captured from the objectives whose optical centres are separated horizontally between each other.

Many procedure have been used to make each image reach a different eye.

The first solution was proposed by D'Almeida in 1858. His solution consisted of placing a rotating shutter in front of the observer, in such a way that it interrupted the passage of light to one eye or the other alternately. The shutter had to be synchronised with the projector which successively projected the images of the left and right eye. This procedure was abandoned due to the noise, mechanical complication and electrical risk.

An up-dated version of this procedure consists of placing a liquid crystal in front of each eye which prevents light from passing to one eye while allowing it to pass to the other, the images being projected in synchrony with this alternation.

In 1891 Ducos du Hauron suggested the anaglyphic method of image separation. Images are printed or projected in complementary colours and observed with the filters of the same colours inverted. If the image of the left eye is blue, green and the right is red, the observer's left eye will see the latter through a red filter and vice versa. The most important drawbacks of this procedure are that it is only possible to project images in black and white and that because of the fact that each eye sees a different coloured image, the so-called phenomenon of retina confusion occurs, which causes headaches in many people and nausea in others.

Projection with polarised light eliminates these drawbacks.

The method was patented by Anderson in 1891 and was not made commercially practicable until 45 years later when E.H. Land invented the Polaroid in the U.S.A. The Polaroid is a relatively cheap sheet of polarised plastic material. The process consists of projecting the image of one eye through a filter that is linearly polarised in a perpendicular direction to the filter used for the other eye. The images projected on a metallized screen, which diffuses the light without de-polarising it, are observed by each viewer with a filter, in each eye, polarised in parallel directions to the filters of the projectors.

The biggest drawbacks of this method are that the unwanted image is not completely eliminated; and, if the observer tilts his head, the polarisation planes of the filters turn at the same time and the system loses its effectiveness.

The latter drawback has been resolved in recent times using circularly polarised filters, with left-handed polarisation being used for one eye and right-handed polarisation for the other.

An attempt to free viewers from having to wear glasses with polarised, coloured or shutter filters was started by Ives in the U.S.A., continued by Gabor in Great Britain; much research and many experiments being completed in the Soviet Union.

All these attempts mainly involve a special screen which receives the two images and channels them separately to each of the observer's eyes. Essentially, the screen is made up of a series of opaque plates separated at a distance equal to their width and mounted in front of a diffusing surface. This device is called a trace. The images corresponding to the right and left eyes are projected onto the screen from projectors separated by an appropriate distance and the trace cuts the images into vertical bands. Viewers must sit in a position such that the trace hides one image from one eye and allows the other image to be observed.

This system has several drawbacks among which we may mention its low luminous output and the fact that observers have to keep their heads absolutely still.

Several variants of this system have been proposed, but it seems that none of them are capable of commercial success.

Regardless of which procedure is used to make a different image reach each eye, there is an additional drawback, common to all stereoscopic systems. It arises from the fact that all observers perceive the same parallax, regardless of the observation point they occupy. In the view of a real scene parallax is less for distant observers than for nearby ones. As it is possible to give only a single parallax value for all observers in the stereoscopic system, corresponding to a determinate observation distance, the most distant observers will see objects with disproportionate depth and the nearest observers will see them in the opposite way.

To summarise the stereoscopic systems, it may be said that the two drawbacks common to all of them are:
- The need to trouble observers either by placing filters or some other device in front of their eyes or by immobilising their head.
- The impossibility of reproducing with a parallax appropriate for each observation distance. This causes a distortion in the third dimension or depth of the reproduced image which is a function of said distance.

The three-dimensional systems arose later. They partly avoid these drawbacks.

Most three-dimensional systems capture images by means of a series of conventional objectives situated in different spatial positions arranged according to a horizontal line or curve.

The reproduction system is different according to the different authors. In the process described in US patent 1,918,705, Ives uses one or two sections of vertical, convergent cylindrical lenses, depending on whether it is frontal or rear projection and a diffusing surface parallel to said sections.

In this system, the maximum angle of orthoscopic vision is limited by the angle of opening of the convergent cylindrical elements which make up the section. In reproduction rooms which need greater angles of vision than the above, these systems are not satisfactory.

The amount of information managed by these three-dimensional systems depends on the number of images reproduced. As the maximum angle of vision is limited, the maximum number of images depends on the minimum angle occupied by each of them. This number is limited by the optical quality of the cylindrical elements making up the section and, in practice, is insufficient for quality reproductions with distant observers.

In the three-dimensional system described by the author of this invention in US patents 5,004,335; 5,013,147 and 5,357,368, two sections of convergent or divergent cylindrical lenses are used.

In this system the orthoscopic angle of vision is not limited, and can reach 180°, nor is the number of images that can be used. For these reasons the system is appropriate for reproduction rooms with any angle and any distance of observation.

Nonetheless, when the angles and distances of observation required by normal reproduction rooms are used, the number of images needed and therefore the amount of information to be captured and processed are enormously high.

The author of this invention describes, in PCT/ES96/00092, a device for reproducing three-dimensional images without using sections of lenses.

The different images are reproduced sequentially by transparency and appear supported in a liquid crystal that is observed by means of a special illumination.

This device seems to be adequate for reproductions on screen sizes similar to domestic televisions. Its drawback is the large number of images necessary in the reproductions of acceptable angles of vision and therefore the large amount of information that it is necessary to process and represent sequentially in the liquid crystal. The liquid crystals currently on the market are scarcely able to respond to the required frame rate.

In order to overcome the difficulties arising from the large amount of information that has to be processed and sequentially reproduced by transparency, devices have been designed which are analogous to the foregoing, that is, which reproduce the different two-dimensional images by transparency, illuminate it with a special system and focus the luminous beam with the help of a convergent optical system on the eyes of the observer.

There are systems, mentioned below, which do not need mechanical movements for monitoring the observer's head, and others which by incorporating mechanical movements, as well as adding other drawbacks arising from such movements, distance themselves from the device described in this invention, without solving any of the problems described here and will therefore not be mentioned here.

British patent 2,272,579, by David Ezra, describes a device configured analogously to those mentioned above, whose purpose is stereoscopic reproduction, as it uses only two or three different images for a single observer. Therefore, the element that reproduces images by transparency needs only an output that is sufficient for the sequential reproduction of two or three images.

In PCT/US93/08412, Eichenlaub describes a stroboscopic system of illumination which may also be used for stereoscopic reproductions, that is, with only two images and for a single observer.

Other work, such as that mentioned below, deals with a larger number of observers.

European patent 0,576,106 Al, by Eichenlaub, describes a device with a configuration analogous to that of David Ezra. Although his system of illumination and focussing may be used for a large number of observers, due to its lack of field depth, the observers' eyes have to be situated in a flat surface which, although it may be parallel to the floor, means a significant restriction. It also uses a very small number of two-dimensional images, which is possible because the focussing system directs the image corresponding to the left eye to all the left eyes of the observers and analogously in the case of the image corresponding to the right eye.

In European patent 0,656,555 Al, Woodgate et al. describe several reproduction systems all of which are based, like the foregoing, on one or two devices which reproduce images two-dimensionally by transparency, a special system of illumination and a device which focusses the luminous beam onto the observers' eyes. The lack of focus field depth of the illumination system makes it necessary for observers to be situated in a plane that is parallel to the reproduction system, that is, no observer can be situated behind another.

The illumination devices used in the foregoing patents are reasonably simple because they are used for one or very few observers who are specially situated. However, when the illumination device has to cover a wide field of observation with randomly situated observers, it is especially complex and expensive, as we explain below.

The condition to be fulfilled by illumination devices is to make a different image reach each eye of each observer.

In order to fulfill this condition when the observers are not situated in the same plane, the observation angle of each observer must be equal to or greater than the angle of illumination of each lens of the illumination device, assuming moreover that these lenses have no other type of optical aberration.

If one assumes the same focussing plane for all the lenses or objectives of illumination making up the illumination device, the angle of observation is the angle under which the optical centres of the observer's eyes are seen most distant from said focussing plane, from the geometric centre of said plane. The angle of illumination of each illuminating objective is the angle under which the optical centres of two contiguous objectives of illumination are seen from the geometric centre of the above-mentioned focussing plane. The distance between two contiguous optical centres of two lenses or objectives of the illumination device coincides with the width and height these should have, as there cannot be dark areas between two contiguous elements.

It can be demonstrated that the angle of observation must be greater than that of illumination so that the panel of objectives of illumination is able to direct a different image to each eye of any observer.

The angle of observation is determined by the distance to the focussing plane of the most distant observer and by the distance between his eyes.

This value is the maximum the angle of illumination can have. In general, this maximum cannot be chosen as an angle of illumination because monitoring of the observer's head requires the detection of much smaller distances than that between the eyes of any observer.

With this value of the angle of illumination and the distance from the focussing plane to the panel of objectives of illumination, their maximum width is determined. The fact that the angle of illumination must be small and the distance to the focussing plane must be great means that the size of the lenses or the objectives making up the system must be very small.

The surface occupied by the illumination sources of each lens or projecting objective must be sufficient to contain at least a number of horizontal and vertical sources that is equal to the number of possible eyes. Given the necessarily limited size of this surface, the surface occupied by each source and the distance between them has to be extremely small, which means that its position must be controlled very accurately, as it can be affected even by distortions due to temperature changes.

There must be as many sources as the product of lenses and number of eyes, whose situation is controlled by a single electronic processor.

The area of illumination covered by the illumination device depends on the quotient between the diameter of the objective or lens of illumination and its focal distance. If it is intended to cover a large area of illumination, the focal distance of the objectives of illumination must be very small in comparison to their diameter. This complicates the design of these devices.

The foregoing explanation makes it clear that when the illumination systems are designed to cover large areas of illumination and for many randomly situated observers, they need a very complex design and are very expensive to manufacture.

Moreover, in the devices described above all the images are reproduced sequentially by transparency and in their entirety on a single electronic reproduction element, or on two of the same size and characteristics, therefore image reproducers by diffusion, such as cinema or TV projectors, cathode ray tubes, plasma screens, led units etc., cannot be used.

The German patent 4,123,895, by D. Dieter and the European patent 0,114,406, by Meacham and G.B. Kirby, describe another device for reproducing three-dimensional images without using lens sections, which achieve three-dimensional reproduction for a large number of observers and a small number of images.

The different images are projected sequentially upon a conventional diffusing surface and are observed by means, of a shutter panel made, preferably, of liquid crystal placed in front of the observer.

The difficulties of this system arise from the inconvenience of placing a panel of liquid crystal in front of and close to each observer.

Reproduction systems which, in addition to horizontal parallax, as used by stereoscopic and three-dimensional systems, also reproduce vertical parallax, are called integral systems.

The invention of integral photography is due to M.G. Lippman in 1908.

The device he conceived consists of a sheet made up of an enormous number of convergent lenses. Behind each of these lenses a different image is captured. Viewing these images through the same lenses reproduces the scene with both horizontal and vertical parallax in pseudoscopic form. A second capturing of this pseudoscopic scene would allow the orthoscopic viewing of the first scene. It is advisable that the lenses and the film in this device make up a single unit so that they remain rigidly joined throughout the process, thus avoiding difficult adjustments.

This system suffers from logical drawbacks arising from the fact that the lenses used are very small and therefore so is the size of the images captured by them. It is also necessary to control the aperture of each lens so as not to invade the field of capture or reproduction of neighbouring lenses. In view of the foregoing, the designs have been complex and practically impossible to market, even in the case of static images.

In patents US 5,013,147, PCT 90/00014 and patent application PCT/ES96/00092, the author of this work proposed an integral reproduction system based, firstly, on capturing the scene by means of a series of conventional objectives situated in the vertices of a rectangular reticle; and then on the projection from the same number of projecting objectives of these two-dimensional images onto two lens sections made up of convergent or divergent cylindrical optical elements that are perpendicular to each other.

In Spanish patent application No. 9700076, by the same author, an integral reproduction system is described which is based, firstly, on capturing the scene by means of a series of conventional objectives situated in the vertices of a rectangular reticle; and then on the projection from the same number of projecting objectives of these two-dimensional images directly, without any optical support, onto where the different images are focussed. To do this, the input pupils of the projection objectives must have a rectangular shape, the sides of the contiguous rectangles being in contact with each other and without any gaps between them.

In the latter cases, even more than in the first ones, the number of images needed and therefore the amount of information to be processed is enormously high.

British patent 2, 226, 642, 8 discloses a pair of stereoscopic google comprising a pair of LCD panels.

Although examination of the drawbacks in the foregoing systems has been limited to those arising in reproduction, capturing is logically much more complex the greater the number of images used. In three-dimensional and integral systems that are appropriate for reproductions with a large number of observers, the capture of such a large number of images is required that an enormously complex and voluminous capturing device must be used, it being impossible in most cases to respond to the needs of filming.

To summarise, it is required that systems of reproduction of images in three-dimensions capture and reproduce a small number of images without troubling observers with any device in front of their eyes.

It has been explained that in systems that have been designed up to now, the difficulties become greater as the number of observers increases.

The device described in this invention resolves these and other drawbacks because it uses a reflexive or refractive optical device, made up of a large number of elements that are "sufficiently small" to provide it with the necessary field depth required by the random situation of observers. It has the additional possibility that for all these elements a single source of illumination can be used, or another type of discriminator for each observation eye, these sources being situated inside a "sufficiently large volume" so as not to need precise positioning. Also, any type of image reproducer can be used, whether by transparency or by diffusion and without using movable elements.

### DESCRIPTION OF THE INVENTION

In order to explain the operation of the system that is the object of this invention, each of the six basic parts which comprise it will be described.

As the first component of the system, a refractive or reflexive element may be used. However, the system will be described with the reflexive element and the refractive element will be considered as a variant.

Thus the first component of the system that is the object of this invention is a retro-reflective screen. This retro-reflective screen is made up of a large number of reflecting elements. A reflector is understood to be the optical part that ensures reflection in the reverse direction to a beam of parallel rays.

The simplest reflector element is made up of two mirrors joined together at an angle of 90° and situated in such a way that the reflecting surfaces are perpendicular to the plane that contains the incident beam. This limitation is overcome if a specular regular tetrahedron is used as a reflecting element, that is, an assembly of three flat mirrors in which every two of them are perpendicular to each other.

The first component of the system that is the object of this invention is a surface with back-reflecting or self-collimating properties, such as that described above, which ensures reflection in the reverse direction and in which the triple mirrors are so small that the direction of the reflected ray, parallel to that of the incident ray, has a small distance so that these directions are to be considered coincident.

Any beam of rays, homocentric at any point, which strikes the retro-reflective surface will, after reflection, become a beam of rays that are practically homocentric at the same point, travelling in the reverse direction.

The second component of the system is an optical element that is able to separate the incident and reflected light beams. The most simple optical part with this property is a semi-transparent mirror forming a non-zero angle with the retro-reflective screen.

Incorporating this second element allows the point from which the beam of divergent rays departs to occupy a physical position different from the point at which the rays converge after back-reflection in the above-described screen.

Thus, corresponding to all divergent beams of rays that are homocentric at any point in space there is another beam of convergent rays at another point distinct from the former. With the two foregoing components, it is possible to make a bi-univocal correspondence between any light-emitting point and another one, distinct and single, where all the rays emitted by the former, after back-reflecting, converge.

In this way, for each eye, considered as a light convergence point, there will be another unique light divergence point situated elsewhere. The totality of observers' eyes will occupy a determinate volume. The points from which the light rays diverge will occupy another volume of the same size situated elsewhere.

In another variant of the same invention a bi-refringent sheet together with a de-polarising sheet may be used as the second component, both being parallel to the retro-reflective screen, since these optical elements can also separate the divergent incident rays from the convergent reflected ones, as will be explained hereinbelow.

In general, at the point where the rays converge an observer's eye will be situated and at the point from where they diverge there will be a light source or simply a point from which a ray of light diverges.

The light captured by a determinate eye is that which is emitted by a single light source after back-reflecting in the screen described in the first place. This eye will see the overhead projection screen uniformly illuminated by that single light source. The same thing will happen for the other eyes of the observers.

As a variant of the foregoing reflexive components, the use of refractive elements may be considered. A retro-reflective element made of refractive material is the screen made up of a large number of convergent lenses, analogous to that used by Lippman for his integral photography, whose rear surface is a diffusing plane. The main drawback of this retro-reflective screen are the unwanted reflections on the convex surface of the convergent lenses. However, if another identical screen is added to this one in such a way that the diffusing plane, in this case translucent, is sandwiched between these two screens like the former, said reflections are avoided.

So that each eye sees a two-dimensional image on the retro-reflective screen it will be necessary to modulate in intensity and colour the light that passes through each element making up the screen described above.

The third component of the system is used as a light intensity and colour modulating element.

The third component of the system is a screen for reproducing two-dimensional images. This screen can generate the images by transparency, as in the case of liquid crystals, by diffusion, as in the case of cinema and video projectors, or by generation of diffuse light, as in the case of cathode ray tubes, plasma screens, led screens or liquid crystal screens illuminated by diffuse light from behind.

In the first case, that is, when the screen reproduces the image by transparency, all light rays are modulated in intensity and colour when they pass through any point of said screen. Therefore this screen, which reproduces by transparency, will be situated parallel to the overhead projection screen mentioned as the first component of the system.

The light from the light sources can be modulated in intensity and colour once or twice, according to whether the screen for reproducing images by transparency is situated between the observer and the separating element or between the latter and the reproducing element.

In the second case, that is, when the screen reproduces the image by projection or generates it directly on its surface, the arrangement of the elements is the same, although it is different from the case of reproduction by transparency.

The diffusing screen is to have the same size as the overhead projector screen and will be situated in front of the elements that emit divergent light rays which, in this case, will have been converted into simple flat mirrors.

The images reproduced, whether by transparency or diffusion, are two-dimensional images. To obtain stereoscopic images, the number of these images must be two; for three-dimensional or integral reproductions, it must be ten or several tens.

If the reproduction is done in a single element by transparency, reproduction of the different images will always be done by multiplexing in time.

If reproduction is done on diffuse screen or by transparency on two different reproducing elements, it will not always be necessary to do it by multiplexing in time. In stereoscopic reproductions, the two images may be projected onto a metallized diffusing screen and each image polarised in a polarisation plane perpendicular to that of the other image, as in the case of ordinary cinema with polarised glasses, or each image may be reproduced on a different reproducing element by transparency, as explained hereinbelow.

The device that is the object of this invention must make a different image reach each eye of each observer without troubling said observer by placing glasses or other devices in front of his eyes. To achieve this, the fourth component of the system is used.

The fourth element that makes up the system is responsible for making a different image reach each eye.

In the most general case in which images are reproduced by multiplexing in time, the fourth element is a simple shutter situated in front of each geometrical place where the generating points of divergent light beams are located, synchronised with the rhythm with which the different images are reproduced.

The optical effect is the same as if each of the discriminating elements were situated in front of each eye of each observer and however the observers are not troubled by any device being placed in front of their eyes.

If the screen which modulates the light intensity and the colour carries out this function by transparency, a variant included in this same invention consists of replacing the shutter and the light source by several sources, one next to another, flashing in synchrony with the generating sequence of the different images.

In the specific case of stereoscopic reproductions, that is, with two single images projected with polarised light in polarisation planes that are perpendicular to each other, the discriminating element may be made up of a pair of polarised filters in the same polarisation planes with which the images are projected.

Except in this case for synchronising the shutter with the image sequence, electronic means are needed which, in addition to multiplexing the images, generate and emit a synchronising signal to the different discriminating elements. These electronic means constitute the fifth element making up the system.

What has been described up to here would allow an appropriate model to be made for stereoscopic projections with only two images, if the observer kept his head still; and for three-dimensional or integral projections if the angle of vision in these covered the entire area in which each observer could situate his eyes.

If, optionally, one wishes to make a stereoscopic or three-dimensional or integral system with a small angle of vision, but which allows observers to move their head freely, it is necessary to incorporate a sixth component in the system.

The sixth component of the system is made up of electronic means that are able to process the information from a detector of the head position of each observer and, according to this information, to control the electronic position of the image-discriminating element to which we referred as the fourth element making up the system.

The system described allows many variants. For example, if one chooses the semi-transparent sheet as the second component element or element that is able to separate convergent light beams from divergent ones, depending on the situation of this sheet, there are different solutions. A separating element may be situated in front of and close to each observer, a single separating element may be situated for all observers between them and the retro-reflective screen and close to the latter, or this separating element may be situated by way of a false ceiling in the projection room, as explained hereinbelow with its corresponding drawings.

A bi-refringent material may also be used as a separating element, thus giving rise to another variant of the same invention described here.

In cases in which the observers are never situated one behind another, a screen may be used as the first component element, made of reflexive material, which reflects only in the horizontal plane and diffuses in the vertical plane. This diffusion may be used as a separating element, in which case it is not necessary to make additional use of an element to separate the convergent beams from the divergent ones. As the first component element a retro-reflective screen may also be used, made of refractive material, such as a lens section which has a translucent rear surface to act as a separating element and a second lens section symmetrical to the first with respect to this translucent surface which prevents anomalous reflections. Using the same model described' in this invention, one may make as many variants as different types of retro-reflective screens in the horizontal and vertical planes, as explained hereinbelow with its corresponding drawing.

In short, the device described in this invention is a system for reproducing images in three dimensions that is able to reproduce stereoscopic, three-dimensional or integral images for any number of observers and wherever they are situated without the need for them to use glasses or any other device in front of their eyes, characterised in that it has a retro-reflective screen that is able to ensure the reflection in the same direction and in the reverse path of all rays belonging to any beam of light rays; it also has an element that can separate the light beams according to their direction of travel, a reproducer of two-dimensional images, an element that is able to discriminate among the different two-dimensional images, a first electronic device that can multiplex the different images and emit a synchronising signal identifying the image which is being reproduced at all times and a second electronic device that is able to receive the synchronising signal and control, in accordance with the latter, the discriminating element and, optionally, the latter may also process the electronic signals which indicate the position of the observer's eyes, from a monitor of the head of each observer, and electronically command the image discriminator in accordance with said signals.

### BRIEF DESCRIPTION OF THE DRAWINGS

Figure 1 shows a reflector element for light rays contained in a horizontal plane.
Figure 2 shows a reflector element of light rays in any direction and a retro-reflective screen made up of a large number of these elements.
Figure 3 shows a separating element made up of a semi-transparent sheet with the retro-reflective screen.
Figure 4 shows a separating element made up of a bi-refringent material and a de-polarising sheet.
Figure 5 shows a retro-reflective screen which works by refraction.
Figure 6 shows the retro-reflective screen of figure 5 together with a separating element and another symmetrical optical section.
Figure 7 shows the screen of figure 6 working by refraction.
Figure 8 shows a retro-reflective screen in the horizontal plane and a diffuser in the vertical plane made up of two specular elements.
Figure 9 shows a retro-reflective screen in the horizontal plane and a diffuser in the vertical plane made up of three specular elements.
Figure 10 shows a lens section acting as a retro-reflective screen in the horizontal plane and a diffuser in the vertical plane.
Figure 11 shows two lens sections working by refraction and acting as a retro-reflective screen in the horizontal plane and a diffusor in the vertical plane.
Figures 12 show the situation of an image-reproducing element by transparency and a semi-transparent sheet as a separating element.
Figure 13 shows the situation of an image-reproducing element on a diffusing screen and a semi-transparent sheet as a separating element.
Figure 14 shows the situation of an image-reproducing element by transparency and a bi-refringent sheet as a separating element together with a de-polarising sheet.
Figure 15 shows the situation of an image-reproducing element by transparency and a screen working by refraction.
Figure 16 shows different types of discriminating elements.
Figure 17 shows the discriminating elements responding to the head movements of observers.
Figure 18 shows a real arrangement of the model with a separating element for each observer and close to the latter.
Figure 19 shows a real arrangement of the model with a single separating element next to the retro-reflective screen and reproduction by transparency.
Figure 20 shows a real arrangement of the model with a single separating element as a false ceiling and reproduction by diffusion.
Figure 21 shows a real arrangement of the model with a single separating element as a false ceiling.
Figure 22 shows a real arrangement of the model which uses a screen that works by refraction.
Figure 23 shows a real arrangement of the model using a bi-refringent sheet as a separating element and a de-polarising element.
Figure 24 shows a diagrammatic arrangement of the model with two image-reproduction systems by transparency and two rows of light sources.
Figure 25 shows a diagrammatic arrangement of the model with two image-reproduction systems by transparency and a single row of light sources.
Figure 26 shows a diagrammatic arrangement of the model analogous to figure 24, but working by refraction.
Figure 27 shows a diagrammatic arrangement of the model the same as figure 26 with a single row of light sources.

### DETAILED DESCRIPTION OF THE FIGURES

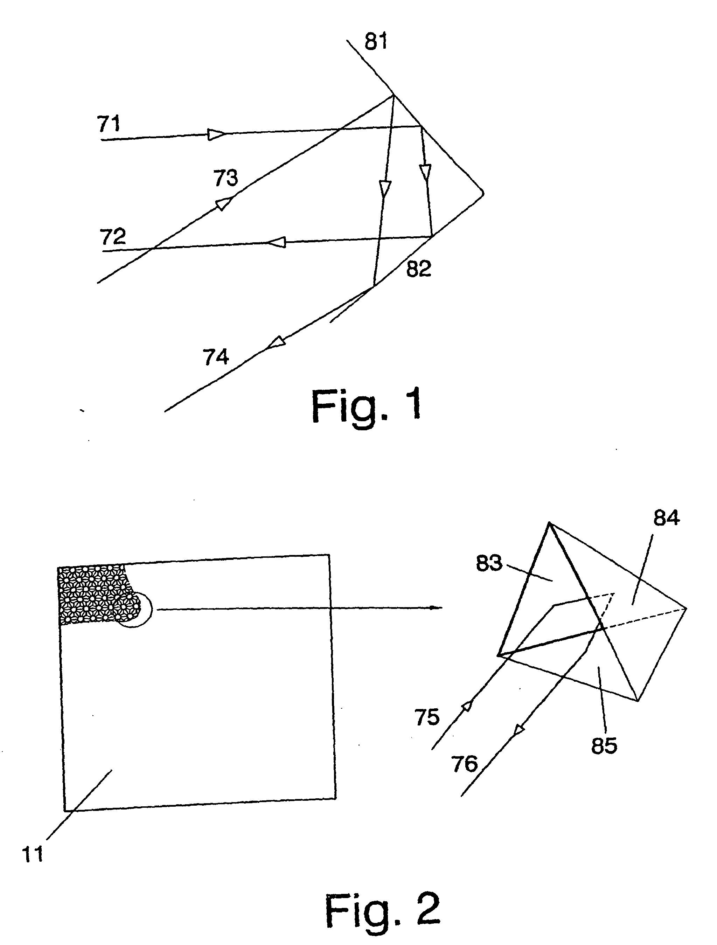

Figure 1 shows the simplest reflector element. This element is made up of two mirrors 81 and 82 that are perpendicular to each other. In the drawing, the intersecting straight line of the reflecting planes is perpendicular to the plane of the paper. Any incident ray contained in the plane of the paper, for example 71 or 73, will be reflected in a parallel direction and in the opposite path 72 or 74.

Figure 2 shows a reflector element in the form of a regular tetrahedron in which each of its sides 83, 84, 85 is a flat mirror. Any incident ray, no matter what its direction, for example 75, is returned after three reflections, one in each side of the tetrahedron, in a parallel and opposite direction 76. Also shown in this figure is the screen made up of a large number of small triple mirrors, like those described above, arranged upon a flat rectangular surface 11. This screen constitutes a surface with back reflecting or self-collimating properties and is the first component of the system that is the object of this invention.

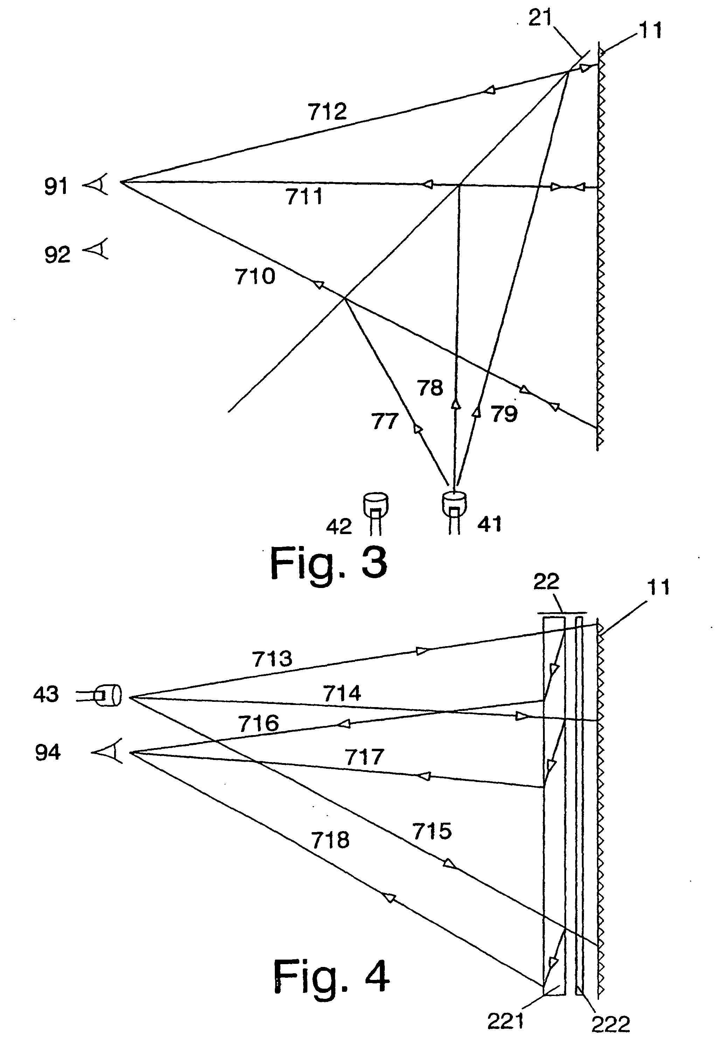

Figure 3 shows the retro-reflective screen 11, detailed in figure 2. The semi-transparent sheet 21 has been placed in front of said screen and said semi-transparent sheet is to be considered as the second component of the system that is the object of this invention. This sheet has the property that it allows approximately half the light energy to pass through it and reflects approximately the other half. The light rays 77, 78, 79 emitted by any light source 41 will strike the retro-reflective screen 11 after being reflected in the semi-transparent sheet 21. This divergent light beam will be reflected by the retro-reflective screen 11, forming a beam of rays 710, 711, 712 which converges at the point 91 after passing through the semi-transparent sheet 21. The optical effect produced by this sheet is to spatially separate the point 41, from which the light rays emerge, from the point 91 where they converge. The rays emerging from any other different light source, for example 42, converge at another point also situated elsewhere, such as at point 92.

Figure 4 shows the retro-reflective screen 11, detailed in figure 2. A bi-refringent sheet 221 and a de-polarising sheet 222 have been placed in front of it. All divergent beams of rays 713, 714, 715 generated by the light source 43 after being reflected undergo a double refraction. A beam of rays reflected after passing through both sheets will follow the direction of the incident beam, but in the opposite path and will converge on the light source 43. The other convergent beam of rays 716, 717, 718 will converge on the point 94, separated vertically from point 43. The optical effect produced by the group of bi-refringent and de-polarising sheets is to spatially separate the point 43, from which the light rays emerge, from the point 94 where they converge. This effect is analogous to that produced by the semi-transparent sheet shown in figure 3 and, therefore, this device is considered as a variant of the second component of the system that is the object of this invention.

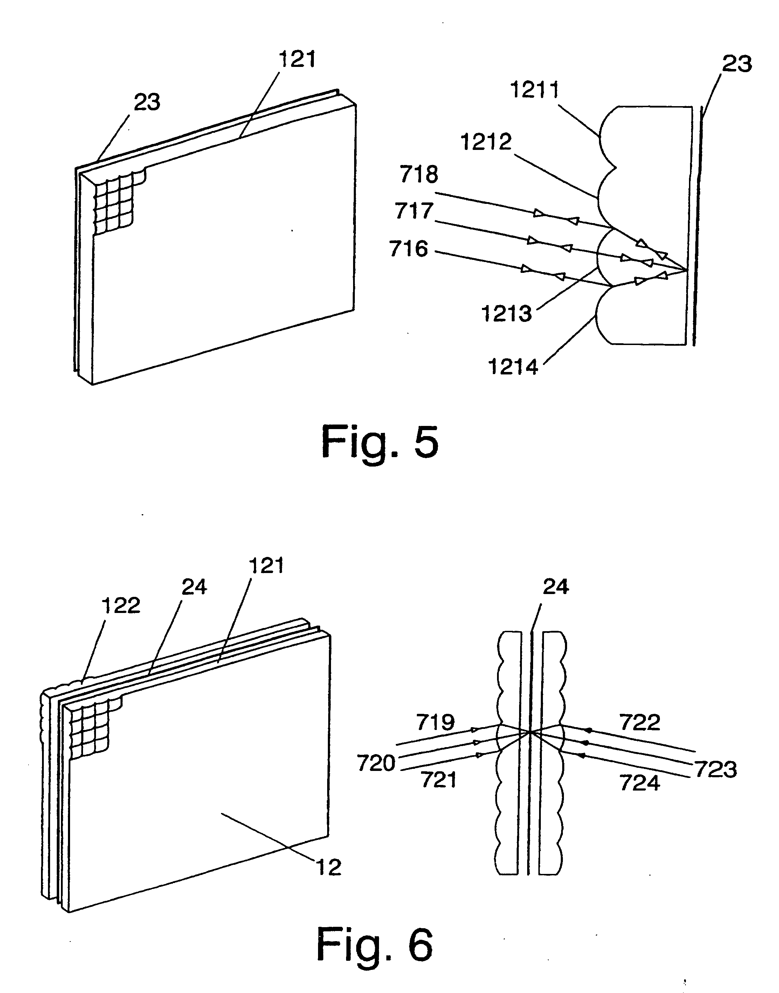

Figure 5 shows another type of retro-reflective screen which works by refraction. This screen is made up of multiple convergent spherical micro-lenses, such as 1211, 1212, 1213, 1214 in whose focal plane an opaque diffusing surface 23 is situated. All beams of rays 716, 717, 718 striking any micro-lens, for example 1213, is reflected in the same direction but in the reverse path 718, 717 and 716. Likewise for the other convergent beams and any other lens. The group of micro-lenses forms a screen 121-23 such as that shown in said figure, which has back-reflecting properties analogous to that shown in figure 2. However, it has the serious drawback of generating unwanted reflections on the convex surface of each micro-lens, which makes it practically useless as a first component of the system.

Figure 6 shows the retro-reflective screen shown in figure 5, in which the opaque diffusing surface 23 has been replaced by a translucent diffusing surface 24 and another identical section of convergent spherical micro-lenses, symmetrical with respect to the diffusing plane, has been added. Any beam of rays 719, 720, 721 striking any micro-lens is focussed on the translucent diffusing surface 24. This focussed beam is dispersed by the surface 24, forming a beam of rays 722, 723, 724 which, after passing through the second section, continues in a direction symmetrical to the incident rays 719, 720, 721. As may be observed, the convergent beam is perfectly separated from the divergent beam and said property may be used to illuminate on one side and observe on the other, thus preventing the unwanted reflections mentioned in the description of figure 5. This group of a double section of micro-lenses 121-24-122, which hereinafter we shall call 12, is considered as a variant of the first and second components of the system that is the object of this invention. The optical effect is the same as that obtained by a convergent micro-lens with two convergent cylindrical lenses whose axes are perpendicular to each other. In this way, one or both of the above-mentioned spherical sections may be replaced by a pair of convergent cylindrical sections with the same focal distances and equal to that of the spherical micro-lens, with their convex sides facing each other and one next to another.

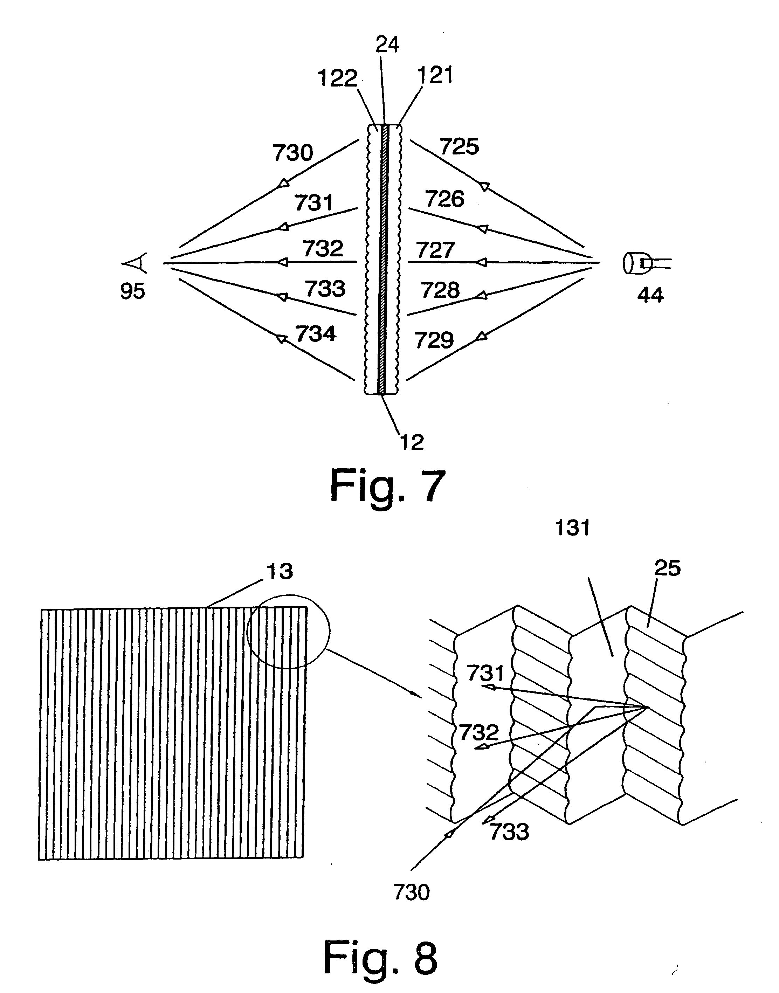

Figure 7 shows the compound system 12 carrying out the same function as that effected by the first and second component of the system described in this invention. The light rays 725, 726, 727, 728, 729 emitted by any light source 44 affect the optical system 12. This divergent light beam is refracted by this optical system 95, forming a beam of rays 730, 731, 732, 733, 734 that converge at the point 95. The optical effect is to spatially separate the point 44, from which the light rays emerge, from the point 95 where they converge. The rays emerging from any other light sources converge at other points situated elsewhere.

Figure 8 shows a screen 13 designed by Ives, which is back-reflecting in the horizontal plane and diffusing in the vertical plane. Each reflecting element of which it is made up has two specular surfaces perpendicular to each other 131, 25 in an arrangement analogous to that shown in figure 1. One of said specular surfaces is flat 131 and the other 25 is a lens section of specular and divergent horizontal cylinders. This screen 13 may be used as a retro-reflective element and as a separating element, the first and second components of the system that is the object of this invention, for applications in which observers are never situated one behind another and for reproductions with only horizontal parallax. Separation of the divergent incident beam 730 from the convergent reflected beam is due to the fact that the screen diffuses the light vertically 731, 732, 733. Therefore it is easy to situate the points from which the light diverges at a place that is vertically separated from the points at which it converges.

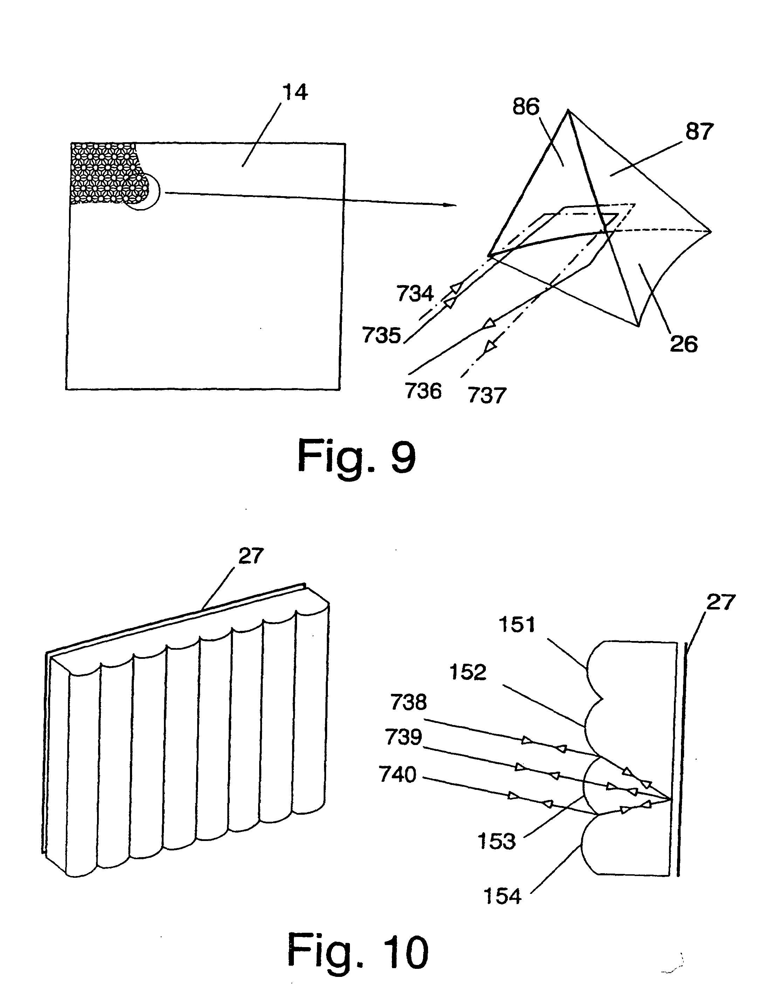

Figure 9 shows a retro-reflective screen in the horizontal plane and a diffusing screen in the vertical plane. Each reflecting element of which it is made up has three specular surfaces 86, 87, 26 in an arrangement analogous to that shown in figure 2. Two of said surfaces 86 and 87 are flat and the third 26 is divergent and cylindrical. This screen 14 can be used as a retro-reflective element and as a separating element, the first and second components of the system that is the object of this invention, for applications in which observers are always situated side by side and never one behind another and for reproductions with only horizontal parallax. Separation of the divergent incident beam 734, 735 from the reflected beam is due to the fact that the screen diffuses the light vertically 736, 737. Therefore it is easy to situate the points from which the light diverges at a place that is vertically separated from the points at which it converges.

Figure 10 shows a lens section working by refraction made up of vertical cylinders 151, 152, 153, 154 in whose focal plane 27 an opaque diffusing surface is situated. Any incident beam of rays 738, 739, 740 is reflected in the same direction but in the reverse path 740, 739 and 738. The group of vertical cylinders and the diffusing plane form a retro-reflective screen with properties analogous to those described above in figures 8 and 9. However, it has the serious drawback of generating unwanted reflections on the convex surface of each cylinder, which are difficult to prevent by tilting the screen and which make it practically useless as a first component of the system.

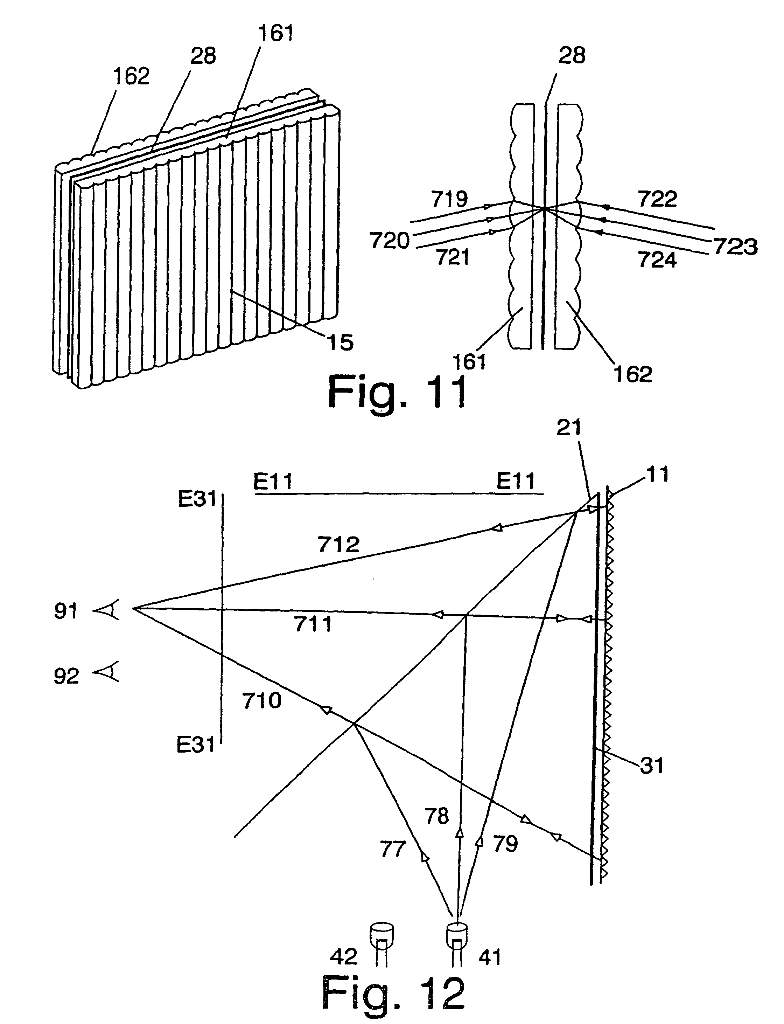

Figure 11 shows the retro-reflective screen shown in figure 10, in which the opaque diffusing surface 27 has been replaced by a translucent diffusing surface 28 and another section of lens section identical to the first and symmetrical with respect to the diffusing plane 28, has been added. Any incident diverging beam of rays 741, 742, 743 is focussed on the translucent diffusing surface 28. This surface disperses the beam, forming a new beam of rays 744, 745, 746 which, after passing through the second section, continues in a direction symmetrical to the incident ray with respect to the translucent surface. The convergent beam is perfectly separated from the divergent beam and said property is used to illuminate on one side and observe on the other, thus avoiding the unwanted reflections mentioned in the description of figure 10. This screen 161-28-162, which hereinafter we shall call 15, may be used as a retro-reflective element and as a separating element, the first and second components of the system that is the object of this invention, for applications in which observers are never situated one behind another and for reproductions with only horizontal parallax. Although the right-hand part of this figure is equal to the right-hand part of figure 6, they represent two different optical devices. Figure 6 represents spherical lenses, whereas figure 11 represents cylindrical lenses, although logically their profile is the same.

Figure 12 represents the same optical diagram as figure 3, to which has been added the image-reproducing element by transparency 31 parallel to the retro-reflective screen 11 and between the latter and the separating element 21. This reproducing element is considered as the third component of the system that is the object of this invention. All incident beams of light 77, 78, 79 are modulated in intensity and colour by the sheet 31 twice. The first time before being reflected in the screen and the second time after being reflected. The convergent beam with the information from a two-dimensional image, after passing through the sheet 21, converges at the point 91 where an eye may be situated that will see the image reproduced in 31 when the light source 41 is active. Analogously for the source 42 and the eye 92. The eyes 91 and 92 could correspond to those of a single observer. This observer would see a different image with each eye if, when the source 41 is activated, the image corresponding to that eye were reproduced in 31. Moments later 41 will be deactivated and 42 activated at the instant in which the screen 31 reproduces the image corresponding to the other eye. If the image-reproducing element 31 is situated between the observer 91, 92 and the separating element 21, for example at E₃₁, the modulation of light in intensity and colour is carried out only once. In this case a second retro-reflective screen E₁₁ may also be situated, which would duplicate the light energy reaching the observers.

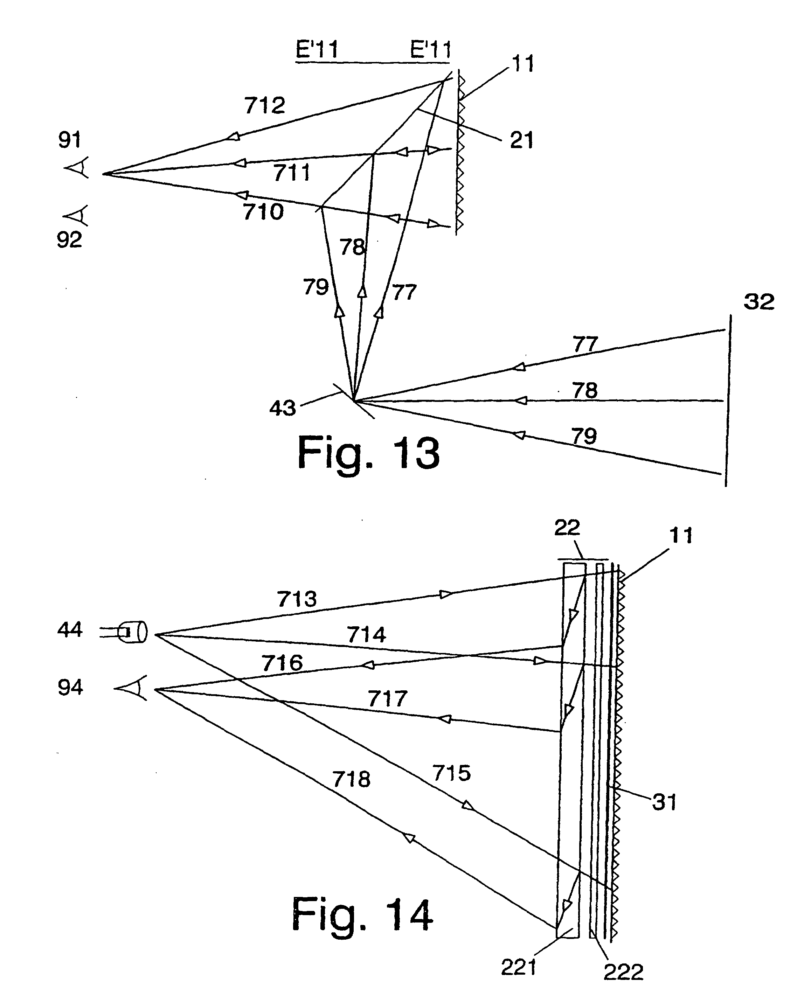

Figure 13 represents the same optical diagram as figure 3, to which has been added the image-reproducing element by diffusion 32 parallel to the retro-reflective screen 11 and of the same size as the latter. The light source 41 of figure 12 has been replaced by a flat mirror situated at the same place 43. The image-producing screen by diffusion 32 is considered as a variant of the third component of the system that is the object of this invention. All beams of rays 77, 78, 79 coming from the diffusing screen 32 with the information from the reproduced image will strike the flat mirror 43 where they will be reflected, forming a beam of divergent rays which will be reflected firstly in the semi-transparent sheet 21 and then in the retro-reflective surface 11 to form the beam of convergent rays 710, 711, 712 which will meet at the point 91 where an eye may be situated. It must be pointed out that this figure 13 represents only an optical diagram which serves to explain the operation of the system that is the object of this invention with reproductions of images upon a diffusing screen, such as images reproduced with the help of cathode ray tubes, plasma screens, cinema or video projectors, led screens or diffusely back-lit liquid crystal screens. The system will be represented hereinbelow closer to its real-life operation. It should be remarked that reproductions of images on diffusing surfaces require that the element 11 should be a specular screen made up of trios of flat mirrors perpendicular to each other, as we explained in figure 2. To double the light flow reaching the observer, another retro-reflective element E₁₁ may be situated.

Figure 14 represents the same optical diagram as figure 4, to which has been added, as a third component of the system, the image-reproducing screen by transparency 31 parallel to the retro-reflective screen 11. All incident beams of rays 713, 714, 715 are modulated in intensity and colour by the sheet 31 twice. The first time before being reflected in the screen 11 and the second time after being reflected. The convergent beam with the information from the two-dimensional image reproduced in 31 converges at the point 94, where an eye may be situated that will see the image when the light source 44 is active.

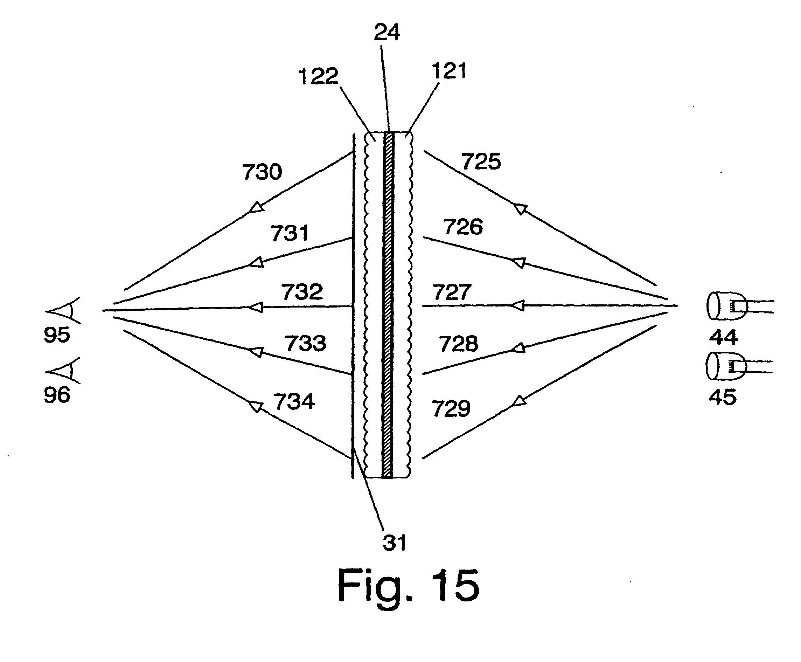

Figure 15 represents the same optical diagram as figure 7, to which has been added the image-reproducing element by transparency 31 parallel to the refracting optical system 13. All divergent incident beams 725, 726, 727, 728, 729 emerging from the source 44, after passing through the system 13, are modulated in intensity and colour by the sheet 31. The convergent beam 730, 731, 732, 733, 734 with the information from the two-dimensional image reproduced at 31, converges at the point 95, where an eye may be situated. If the eyes 95 and 96 correspond to those of an observer, the latter would see a different image with each eye. When the source 44 is activated, the image corresponding to that eye 95 is reproduced at 31. After the source 44 is de-activated, 45 is activated and the image corresponding to eye 96 is reproduced at 31.

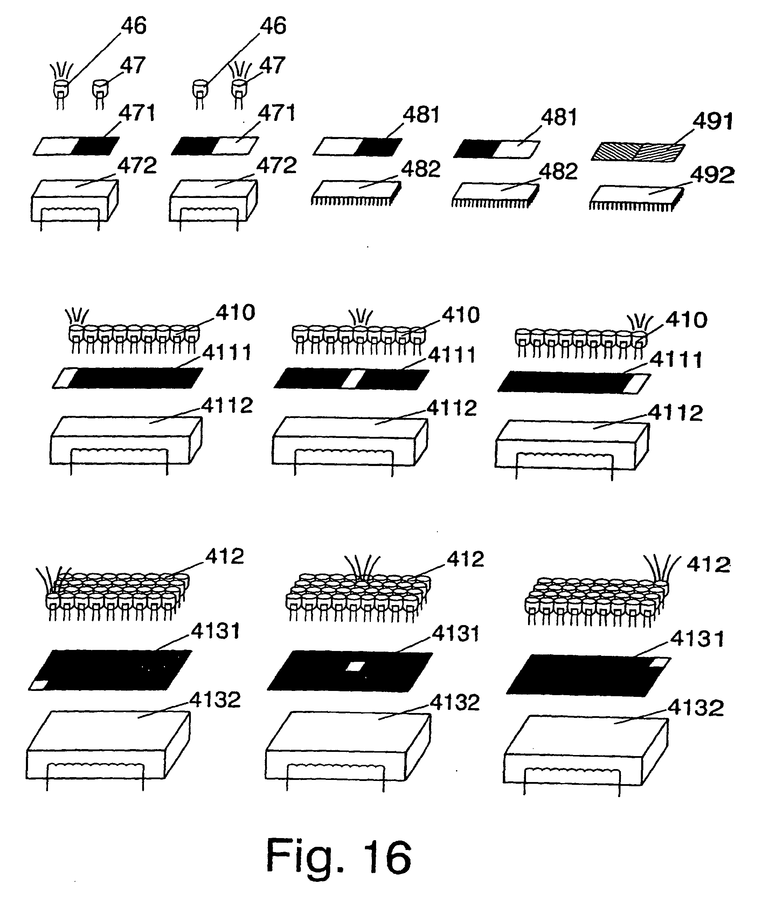

Figure 16 shows different types of image-discriminating elements. These discriminating elements constitute the fourth component of the system that is the object of this invention. In the optical diagrams shown in figures 12, 13 and 14, each eye 91, 92, 94 may be considered as a convergence point of light beams which originated at another point 41, 42, 43, 44, spatially separated from the first ones. In figure 12 the light sources 41 and 42 can be activated and de-activated alternately, and each eye 91, 92 of an observer would see the image reproduced on the reproduction screen 31 according to that alternation. When the source 41 was active, the source 42 would be de-activated and the eye situated at 91 would see the image reproduced at 31. Analogously, when the source 42 was active, the source 41 would be de-activated and only the eye 92 would see the image. In this way, alternating the sources 41 and 42 functions as a discriminating element and therefore these sources 46, 47 have been included as a discriminating element in the upper part of figure 16. This alternation may also be achieved with a single light source 472 in front of which a shutter 471 has been placed. This shutter will be able to block the right half, leaving the left half transparent and vice versa.

In the diagram shown in figure 13 a shutter may be used such as the foregoing 481, acting as a discriminating element by being situated in front of the mirror 482 which replaced 43 and achieving the same effect. However, as in figure 13 the reproduction is made upon a diffusing surface, the possibility exists of reproducing upon said surface a pair of stereoscopic images projected with polarised light, each one in a polarisation plane perpendicular to that of the other. In this case, the discriminating element could be two filters 491 polarised in the same perpendicular planes as above, and a flat mirror 492 to replace 43.

In the case of three-dimensional reproductions in which one needs to reproduce ten or several tens of two-dimensional images, again, as many light sources 410 as images for each observer or an electronic shutter 4111 could be used as a discriminating element and a single light source 4112 in which the transparent window moves from left to right or from right to left in synchrony with the projection of the different images. The width of the light source, or of the transparent window in the case of shuttering, may be different sizes according to the observation distance of each observer; in this way, parallax can be accommodated to the observation distance.

Finally, in the case of integral reproductions, the discriminating element could be a series of light sources 412 whose lighting up cadence would be from left to right and from up to down or an electronic shutter 4131 in front of a single source 4132 whose transparent observation window is a square which moves from left to right and from up to down. In both cases the lighting up of the source or the movement of the transparent window will be carried out in synchrony with the reproduced image. The size of the source and of the transparent window may be made different for each observer according to his observation distance, and parallax can be accommodated to that distance.

Although the luminous area of the sources has been represented in all the figures with a circular shape, in reality it may have any other shape, the most logical one being rectangular.

In order to synchronise the lighting up of the sources or the movement of the transparent window of the shutter, it will be necessary to use electronic means, which constitute the fifth component of the system. This fifth component will carry out the following functions: generate the images for the reproduction screen, emit a synchronising signal for the lighting up of the source or the opening of the shutter's transparent window and, finally, command the opening of said window. The transmission of the synchronising signal may be done electro-magnetically, by radio or light waves, electrically, through a connection cable or electro-acoustically.

The discriminators described above are effective in stereoscopic reproductions with only two reproduced images, if the observer keeps his head still and in three-dimensional or integral reproductions, if the observer moves within the area of vision covered by the sources or by the shutters.

If it is desired that the observer moves freely, it will be necessary to detect the head movement and make the discriminating element to respond appropriately to this movement. This operation will be compulsory in stereoscopic reproductions and optional in three-dimensional or integral reproductions.

To carry out said operation electronic means are needed, constituting the sixth component of the system which, using the input data provided by a detector of the observer's head position, are able to generate an output signal to control the discriminator.

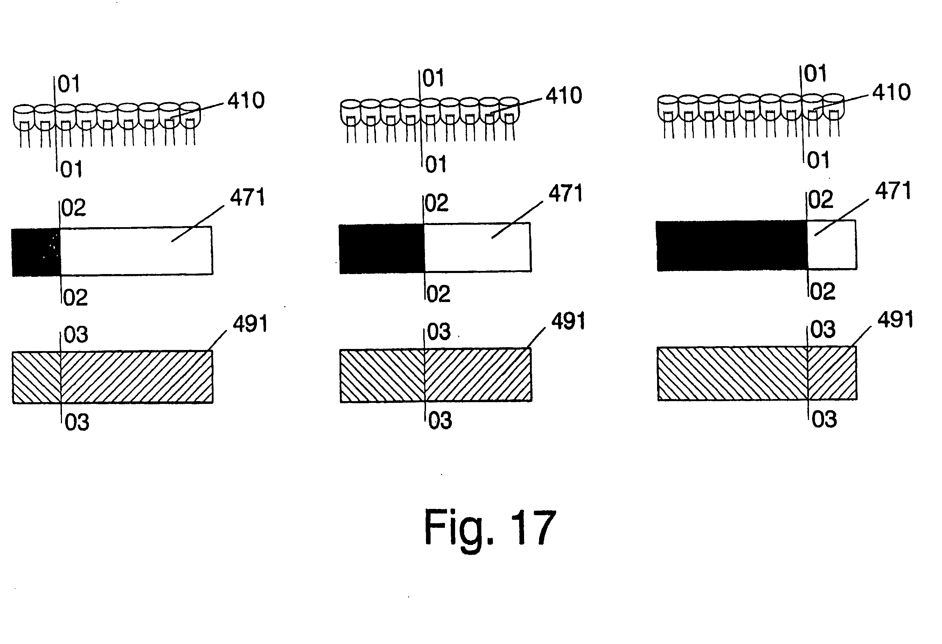

Figure 17 shows the response of the discriminators to the observer's head movement. In the case of stereoscopic images and if different illumination sources are used as a discriminating element, the latter are to be arranged in a row 410, as indicated in said figure 17. The width of the row must be sufficient to cover the whole area in which the observer may move. Depending on the position of the observer's nose, line 01, the lighting up of the sources situated to the left of said line will synchronise with the reproduction cycles of the image of that eye, and analogously with the sources situated to the right of 01 and the right eye. The movement of the observer to left or right is translated into the movement of the line 01 to left or right, as shown in this figure. In the case of stereoscopic images and if a shutter is used, such as 471, in correspondence with the movement to left or right of the observer's nose, the vertical line 02 separating the transparent window from the opaque one or the vertical line 03 separating the polarisation planes that are perpendicular to each other in the shutter 491 will move at the same speed and the same distance. In the case of three-dimensional or integral reproductions, it will be necessary to act upon the discriminating elements only if the area of possible position for each eye is greater than the area covered by the discriminator, in which case the space covered by the shutter 4111 in the three-dimensional reproduction will move horizontally as far as necessary to cover both the observer's eyes when he moves; and in the case of integral reproduction, the area covered by the shutter 4131 will move horizontally and/or vertically over the distance necessary to cover both the observer's eyes.

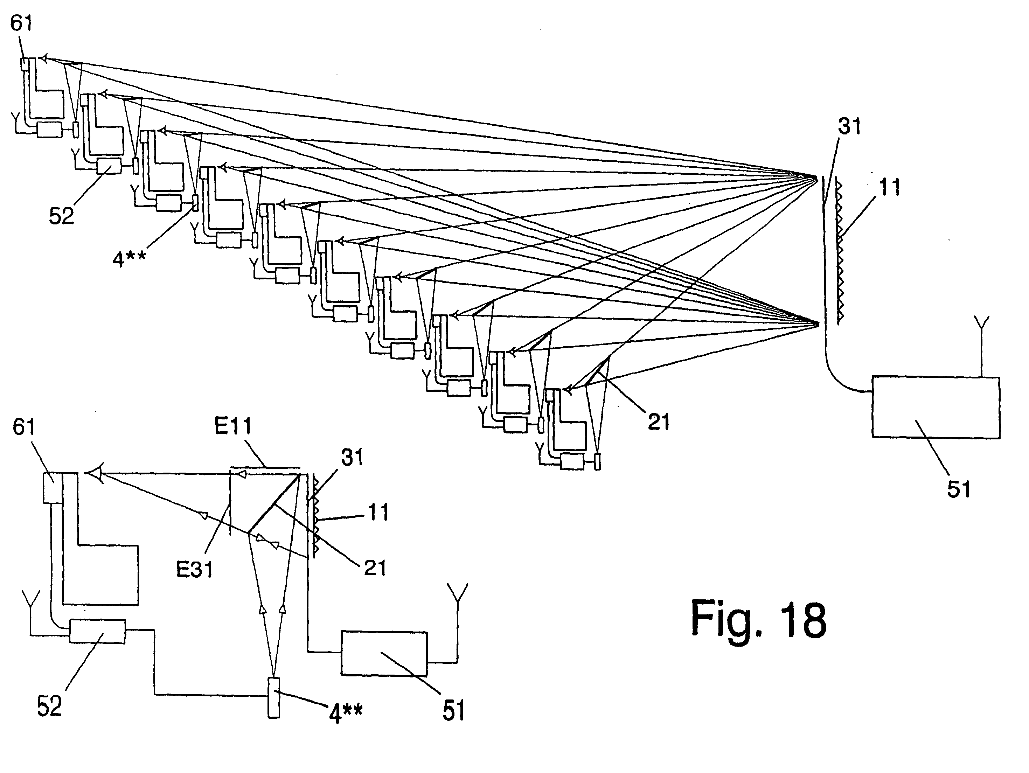

Figures 18, 19, 20, 21 and 22, which are commented on below, show some examples of the system that is the object of this invention in reproduction rooms for many observers. The possibilities of placing the different components of the system are very great and a special design must be made according to each room and its shape. The remaining figures show simple guiding diagrams. When several discriminating elements may be used in the figures, they are designated by 4**, where each asterisk represents several different digits.

Figure 18 shows an arrangement of the different elements of the model for multiple observers. The observers have been situated in tiers so that all of them can see without disturbing each other. A specular overhead proj ecting screen 11 is used as the first element of the system, such as that shown in figure 2. A semi-transparent sheet 21, different for each viewer, is used as a separating element. The reproduction is carried out by transparency on the screen 31 whose signal with the images is received from the electronic means 51. This device 51 also generates a signal with information about which image is being reproduced at all times, which will be received by other electronic means 52. The electronic device 52 receives the synchronising signal from 51 and regulates the discriminating element. Optionally, the electronic device 52 can also receive the signal from a monitor of the observer's head 61 and control the discriminating element with this signal. The discriminator can be any of those shown in figure 16, except for elements 481, 491 and the mirrors 482, 492. In the lower part, a single observer is shown, such as the player on a video game. The elements are the same as in the rest of the drawing, the only difference lying in the situation of the separating element 21, which in this case have been situated close to the reproducing screen 31 and distant from the observer. Modulation of the image in intensity and colour is carried out by the reproducing element 31 twice, once when the light beams are directed towards the screen 11 and again after being reflected in the screen. In the drawing in the lower part, where a single observer is represented, a single modulation can be achieved by situating the reproducing screen 31 at position E₃₁. In this case a second retro-reflective screen may also be situated at E₁₁, so that the light flow reaching the observers will be double that of the first case.

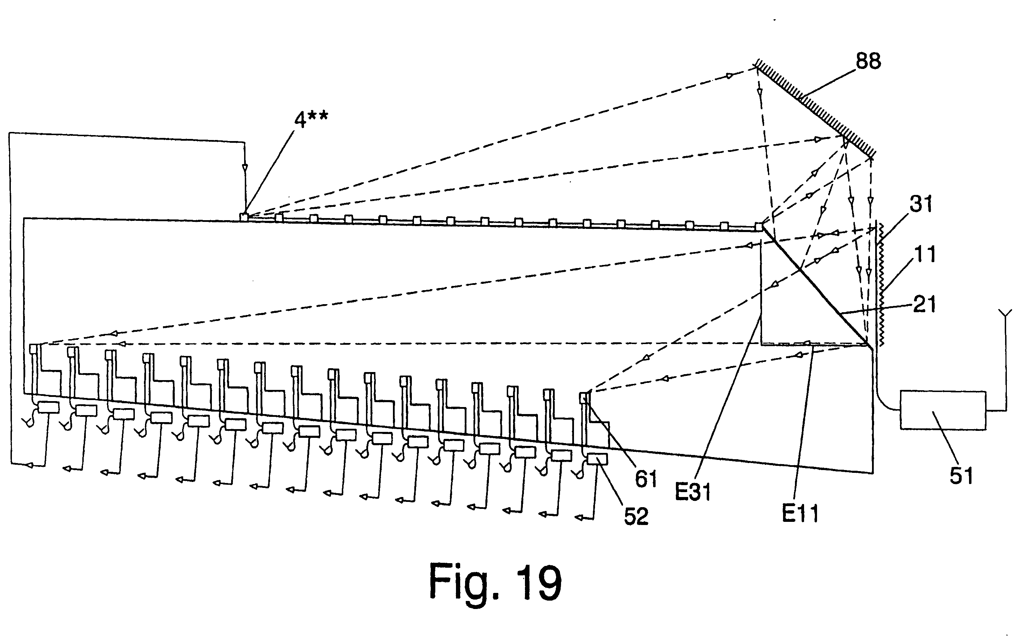

Figure 19 shows an arrangement of the different elements of the model for multiple observers. The observers are situated in tiers so that they do not obstruct each others' vision. A specular overhead projecting screen 11 is used as the first element of the system, such as that shown in figure 2. A single semi-transparent sheet 21 is used as a separating element for all viewers. Reproduction is carried out by transparency on the screen 31 whose image signal is received from the electronic means 51. The electronic device 52 receives the synchronising signal from 51 and regulates the discriminating element. Optionally, the electronic device 52 can also receive the signal from a monitor of the observer's head 61 and control the discriminating element in accordance with this signal. The discriminator can be any of those shown in figure 16, except for elements 481, 491 and the mirrors 482, 492. The light emerging from this discriminating element undergoes two reflections before reaching the reproducing screen 31. The first occurs in the flat mirror 88 and the second in the separating element, in this case a semi-transparent sheet 21. The object of the mirror 88 is to situate the discriminating elements along and upon the ceiling of the projection room. However, in another arrangement not shown in the drawing, said mirror can be suppressed and the discriminating elements situated symmetrically with the eyes with respect to the sheet 21. Modulation of the image is carried out by the reproducing element 31, situated between the separating element 21 and the back-reflector 11, twice, once when the light beams are directed towards the screen 11 and again after being reflected in the screen. A single modulation can also be achieved if the reproducing screen is situated at E₃₁. In this case a second retro-reflective screen may also be situated at E₁₁, so that the light flow reaching the observers will be double that of the foregoing case.

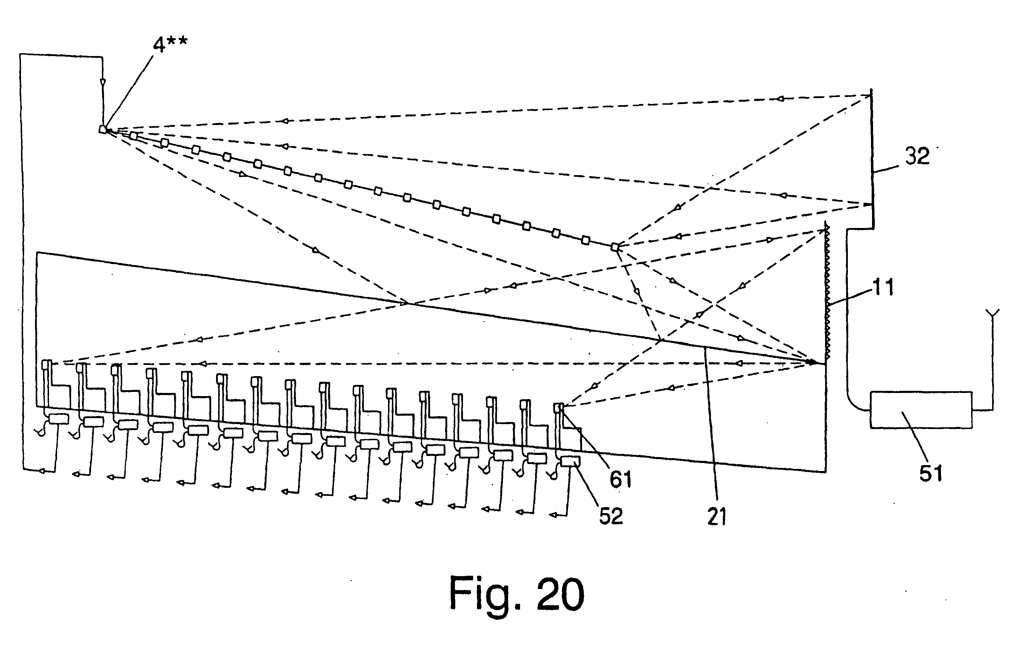

Figure 20 shows an arrangement of the different elements of the model for multiple observers. The observers are situated in tiers so that they do not obstruct each others' vision. This drawing shows the profile of a reproduction room and each observer represents a row of observers. A specular retro-reflective screen 11 is used as the first element of the system, such as that shown in figure 2. A single semi-transparent sheet 21 is used as a separating element, in the form of a false ceiling, for all viewers. The reproduction is carried out by diffusion on the screen 32 whose image signal is received from the electronic means 51 or from a cinema projector. This device 51 also generates a signal with information about which image is being reproduced on the screen 32 at all times, which will be received by the other electronic means 52. The electronic device 52 receives the synchronising signal from 51 and regulates the discriminator. Optionally, the electronic device 52 can also receive the signal from a monitor of the observer's head 61 and control the discriminator with this signal. The discriminator can be 481-482, 491-492 as shown in figure 16.

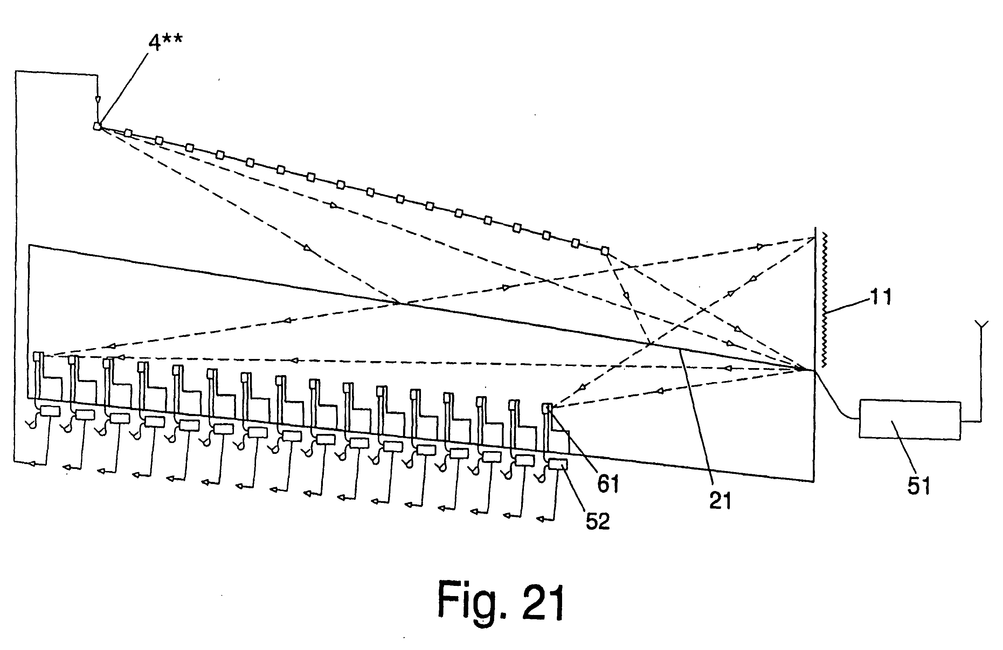

Figure 21 is another arrangement with the same elements as those in figure 18 and with the same features. The difference lies in the situation of the separating element or semi-transparent sheet 21, is now situated as a false ceiling.

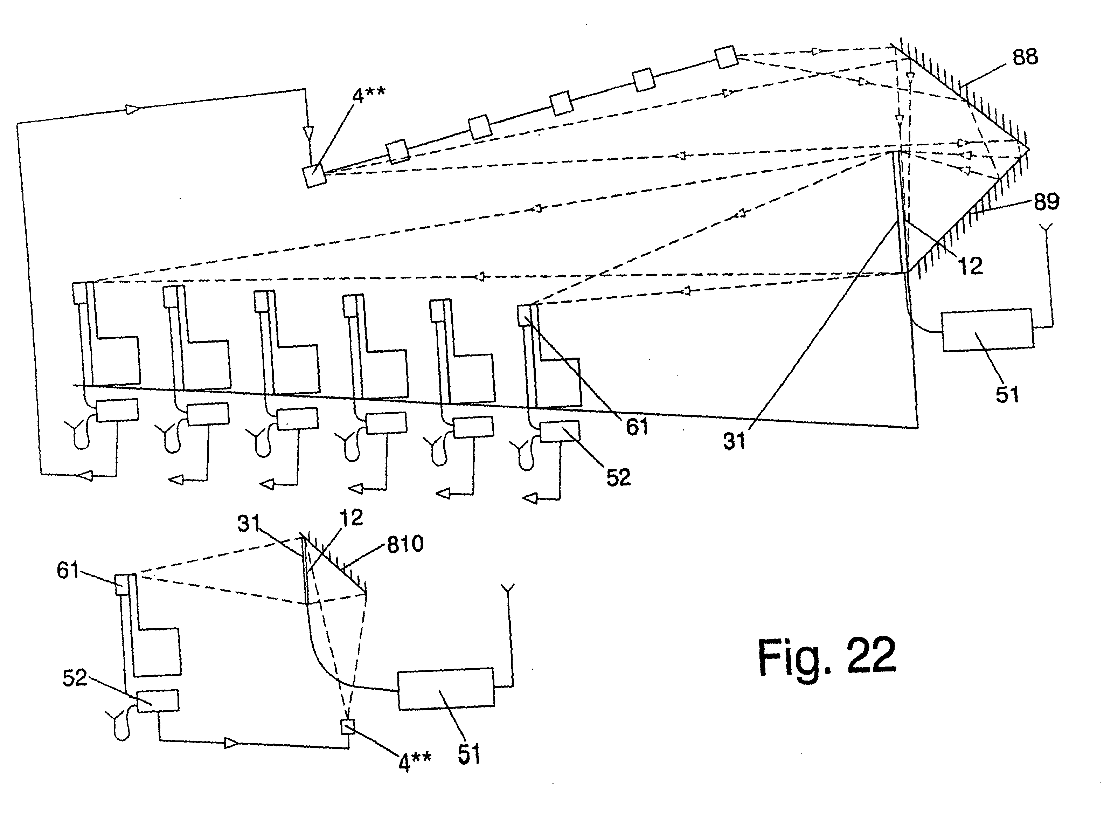

Figure 22 shows an arrangement of the different elements of the model for multiple observers. The observers are situated in tiers so that they do not obstruct each others' vision. A double section of convergent spherical micro-lenses 12 is used as the first and second elements of the system, joined in the form of a sandwich to a translucent sheet situated in the focal plane of both sections, as described in figure 7. Reproduction is carried out by transparency on the screen 31 whose image signal is received from the electronic means 51. The electronic device 52 receives the synchronising signal from 51 and regulates the discriminating element. Optionally, the electronic device 52 can also receive the signal from a monitor of the observer's head 61 and control the discriminating element in accordance with this signal. The discriminator can be any of those shown in figure 16, except for elements 481 and 491 and the mirrors 482 and 492. The light emerging from this discriminating element undergoes two ref lections before reaching the optical system, after being reflected in the latter it reaches the reproducing screen 31. These two reflections in the mirrors 88 and 89 serve to situate the space occupied by the discriminating elements in the ceiling of the reproduction room. Other arrangements may be chosen, such as for example, situating the discriminating elements symmetrically with the eyes of the observers with respect to the optical system. In the lower part of this drawing a single observer is shown, such as a player on a video game. The elements are the same as in the rest of the drawing, except for the situation of the discriminating element, which in this case emits its light onto the optical system by means of a single flat mirror 810.

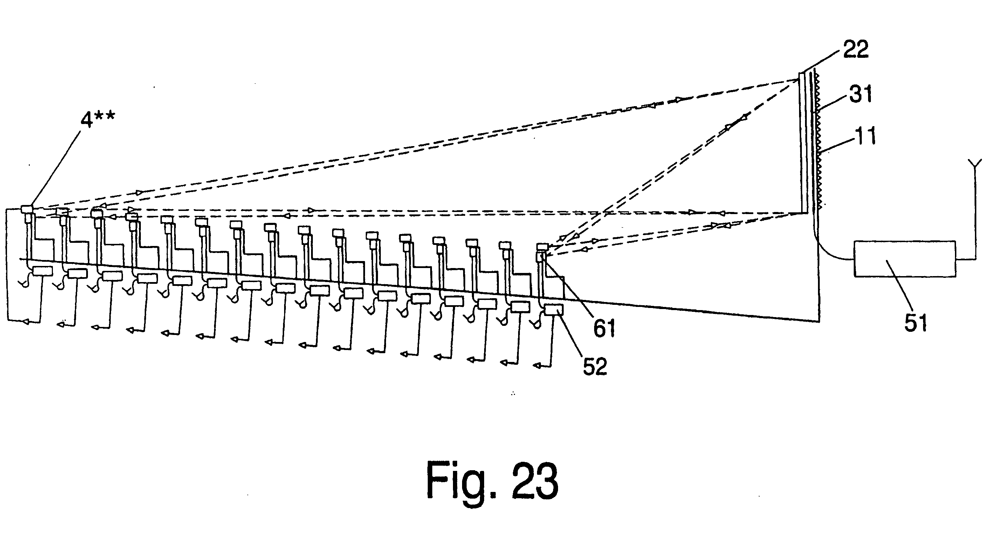

Figure 23 shows another arrangement of the different elements of the model for multiple observers. The first element of the system is a specular retro-reflective screen 11, such as that shown in figure 2. A bi-refringent sheet together with a de-polarising sheet 22 are used as a separating element, both being parallel to the retro-reflective screen 11. Reproduction is carried out by transparency on a reproduction screen 31 whose image signal is received from the electronic means 51. The electronic device 52 receives the synchronising signal from 51 and regulates the discriminating element. Optionally, the electronic device 52 can also receive the signal from a monitor of the observer's head 61 and control the discriminating element in accordance with this signal. The discriminator can be any of those shown in figure 16, except for elements 481 and 491 and the mirrors 482 and 492. The discriminating elements are situated above the heads of the observers. The light emerging from these discriminating elements before and after its back-reflection in the screen 11 undergoes a double refraction which allows the divergent incident beam to be separated from the convergent reflected beam. These light beams are modulated by the reproducing screen by transparency 31.

For the sake of simplicity, in the case of reproducing images by transparency, we have preferred throughout the foregoing description to do so upon a single element by multiplexing in time.

In the case of stereoscopic reproductions, that is, reproductions of only two bi-dimensional images, one may, as mentioned above, reproduce each image in a different reproducing element by transparency, that is, by using two reproducing elements.

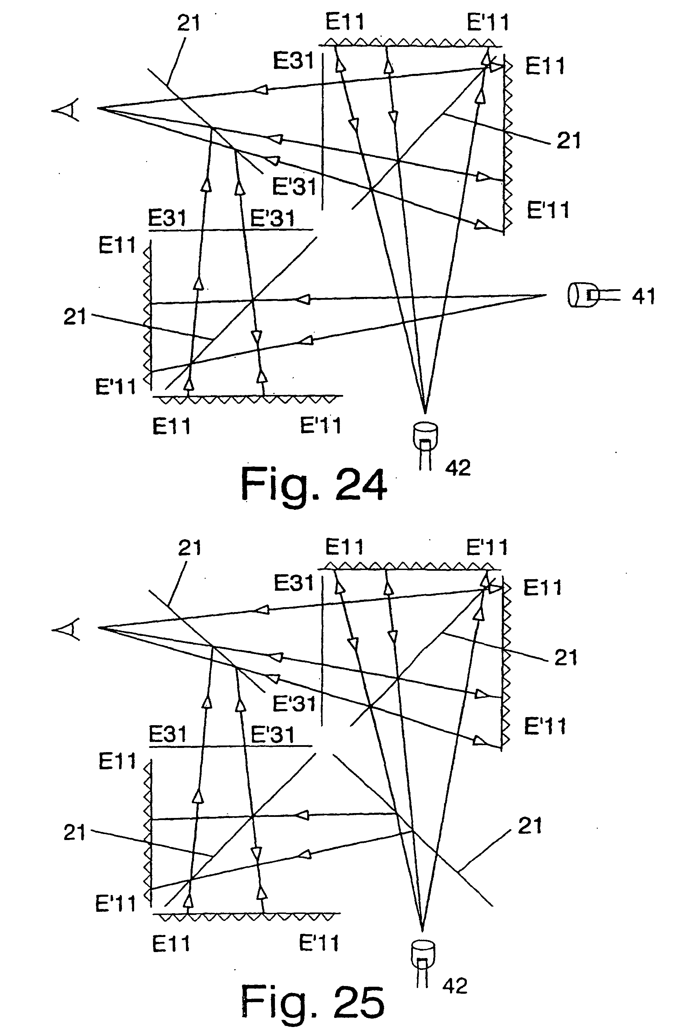

Figure 24 shows a diagrammatic arrangement of said solution analogous to that of figure 12, using the following: four specular elements E₁₁, E'₁₁, two image-reproducers by transparency E₃₁, E'₃₁, three semi-transparent sheets 21 and two rows of light sources 41, 42, one for each eye.

Figure 25 shows the same diagrammatic arrangement as that shown in figure 24, in which a single light source 41 is used together with an additional semi-transparent sheet 21. This sheet and the one which receives light by reflection from it are turned so that the single row of light sources 42 directs its light to two different places, one for each eye.

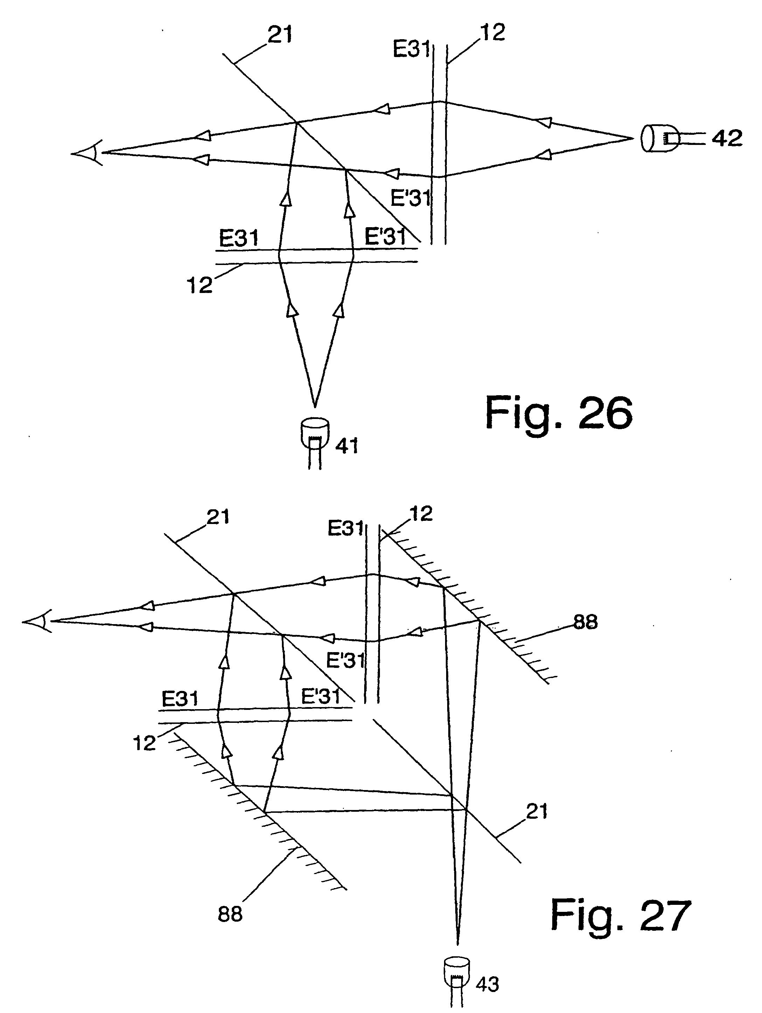

Figure 26 shows a diagrammatic arrangement analogous to that of figure 15, but with two refractive elements 12, two image-reproducers by transparency E₃₁, E'₃₁, a semi-transparent sheet 21 and two rows of light sources 41, 42, one for each eye.

Figure 27 shows the same diagrammatic arrangement as that shown in figure 26, in which a single light source 43 is used together with an additional semi-transparent sheet 21 and two flat mirrors 88. This sheet and the one which receives light by reflection from it are turned so that the single row of light sources 42 directs its light to two different places, one for each eye.

Figures 8 and 9 represent two types of retro-reflective screens 13, 14 that are specular in the horizontal plane and diffusing in the vertical plane, which may be used as the first and second components of the model. In this case the reproductions will be solely in horizontal parallax. The separating element is the specular surface of vertical diffusion 25 and 26. The discriminating elements which can be used are those shown in figure 16, except for 482, 491, 492, 412, 4131, 4132 and they must be situated as indicated in figures 18 or 23, with the proviso that observers can never be one behind another.

Figure 11 shows a type of screen 15 which works by selective refraction in the horizontal plane and diffusion in the vertical plane, which may be used as the first and second components of the model. Only horizontal parallax can be reproduced. The separating element is the vertical diffusion screen itself 28. The discriminating elements which can be used are those shown in figure 16, except for 482, 491, 492, 412, 4131, 4132. Figure 22 shows a possible physical positioning of the elements with the proviso that observers can never be one behind another.

## Claims

1. A system for reproducing images in three dimensions, capable of reproducing stereoscopic, three-dimensional or integral images for any number of observers whatever their situation, without the need for them to use glasses or any other device in front of their eyes, comprising a retro-reflective screen (11, 12, 13, 14, 15) which can ensure the reflection in the same direction and in the opposite path of any ray belonging to any beam of light rays, an element which can separate the light beams according to their direction of travel (21, 22, 24, 25, 26, 28), a bi-dimensional image-reproducer (31, 32), an element which can discriminate the different bi-dimensional images from among each other (46-47, 471-472, 481-482, 491-492, 410, 4111-4112, 412, 4131-4132), a first electronic device (51) which is able to multiplex the different images and emit a synchronising signal identifying the image that is being reproduced at each moment and a second electronic device (52) which is able to receive the synchronising signal and control the discriminating element, by means of the latter, signal.

2. A system for reproducing images in three dimensions in accordance with claim 1, in which the retro-reflective screen (11) is made up of a large number of reflecting elements and in which each reflecting element is made up of three flat mirrors every two of which are perpendicular to each other.

3. A system for reproducing images in three dimensions in accordance with claim 2, in which a semi-transparent sheet (21) is used as the separating element.

4. A system for reproducing images in three dimensions in accordance with claim 2, in which a sheet of bi-refringent material and a de-polarising sheet (22) are used as a separating element, both being parallel to each other and to the retro-reflective screen.

5. A system for reproducing images in three dimensions in accordance with claim 1, in which the retro-reflective screen and the separating system are made up of two equal sections (12), each of which sections is made up of a large number of convergent spherical lenses on one side, the other side being flat, both sections being joined by the latter side, in the form of a sandwich, to a flat translucent sheet (24) situated in its focal plane.

6. A system for reproducing images in three dimensions in accordance with claim 5, in which one or both sections of convergent micro-lenses is replaced by two lens sections with their axes perpendicular to each other, their convex sides facing and in contact with each other and with the same focal distances as the spherical micro-lens.

7. A system for reproducing images in three dimensions, without vertical parallax, in accordance with claim 1, in which the retro-reflective screen (13) and the separating system are made up of a large number of reflecting elements, and in which each reflecting element is made up of a flat mirror (131) and a specular lens section made up of horizontal cylinders (25), both being perpendicular to each other and the observers being situated side by side and never one behind another.

8. A system for reproducing images in three dimensions, without vertical parallax, in accordance with claim 1, in which the retro-reflective screen and the separating system are made up of a large number of reflecting elements (14), and in which each reflecting element is made up of three surfaces, the first two being two flat mirrors perpendicular to each other and the third one being a cylindrical mirror (26), the observers being situated side by side and never one behind another.

9. A system for reproducing images in three dimensions, without vertical parallax, in accordance with claim 1, in which the retro-reflective screen and the separating system are made up of two equal lens sections (15) made up of vertical cylindrical lenses joined in the form of a sandwich at their flat sides to a flat translucent sheet (28) situated at its focal distance, observers being situated side by side and never one behind another.

10. A system for reproducing images in three dimensions in accordance with claims 3, 4, 5, 6, 7, 8 and 9, in which a single image-reproducing element (31) is used, which can modulate the light by transparency, such as a liquid crystal.

11. A system for reproducing images in three dimensions in accordance with claim 10, and in which the reproducing element by transparency (31) is situated between the separating element (21) and the retro-reflective element (11).

12. A system for reproducing images in three dimensions in accordance with claim 10, in which the image-reproducing element (31) by transparency is situated between the observer and the separating element (21).

13. A system for reproducing images in three dimensions in accordance with claim 3, in which in the reproducing element the images are reproduced by diffusion (32), for example by means of cathode ray tube, plasma screen, led unit, back-lit liquid crystal, with a flat diffusing screen, or cinema or TV projectors.

14. A system for reproducing images in three dimensions in accordance with claims 12 and 13, in which a second retro-reflective element E₁₁ is added, perpendicular to the first (11).

15. A system for reproducing images in three dimensions in accordance with claim 10, in which the image-discriminating element is a light source and an electronic shutter (471-472, 4111-4112, 4131-4132).

16. A system for reproducing images in three dimensions in accordance with claim 10, in which the image-discriminating element is several light sources adjacent to each other (46-47, 410, 412).

17. A system for reproducing images in three dimensions in accordance with claim 13, in which the discriminating element is a flat mirror and an electronic shutter (481-482).

18. A system for reproducing images in three dimensions in accordance with claim 13, for stereoscopic reproductions in which the discriminating element is two polarised filters whose polarisation planes are perpendicular to each other (491-492).

19. A system for reproducing images in three dimensions in accordance with claims 4, 7 and 8, in which several light sources adjacent to each other are used as a discriminating element, being situated above the head of each observer (46-47, 410, 412).

20. A system for reproducing images in three dimensions in accordance with claims 4, 7 and 8, in which the image-discriminating element situated above the head of each observer is a light source and an electronic shutter (471-472, 4111-4112, 4131-4132).

21. A system for reproducing images in three dimensions in accordance with claim 1, for stereoscopic reproductions in which the number of reproduced images is two.

22. A system for reproducing images in three dimensions in accordance with claim 1, for three-dimensional or integral reproductions in which the number of reproduced images is ten or several tens.

23. A system for reproducing images in three dimensions in accordance with claim 21, in which there is a first electronic means (51) which multiplexes two images and sends a synchronising signal with information about the image which is being reproduced.

24. A system for reproducing images in three dimensions in accordance with claim 22, in which there is a first electronic means (51) which multiplexes several images and sends a synchronising signal with information about which image is being reproduced to the second electronic means (52) which controls the discriminating element according to this information.

25. A system for reproducing images in three dimensions in accordance with claim 23, in which the second electronic means (52) is arranged to process the information from a monitor of the observer's head (61) and with this signal controls the image-discriminator corresponding to this observer.

26. A system for reproducing images in three dimensions in accordance claim 24, which is arranged to reproduce images with an angle of vision that is insufficient to cover the entire width which the observer's eyes may occupy, in which there is a second electronic means that is arranged to process the information from a monitor of the observer's head and controls with this signal the image-discriminator corresponding to this observer.

27. A system for reproducing images in three dimensions in accordance with claim 3, in which a different semi-transparent sheet is used for each observer.

28. A system for reproducing images in three dimensions in accordance with claim 3, in which a single semi-transparent sheet is used in front of the retro-reflective screen.

29. A system for reproducing images in three dimensions in accordance with claims 3 and 4, in which a single semi-transparent sheet is used as a false ceiling.

30. A system for reproducing images in three dimensions in accordance with claims 3, 4, 5, 6, 7, 8 and 9 for the case of stereoscopic reproductions, that is, with only two images, in which the following are used: two image-reproducing elements by transparency, two overhead-projecting elements perpendicular to each other, a semi-transparent screen forming an angle of 45° with each of them and two rows of light sources, one for each eye.

31. A system for reproducing images in three dimensions in accordance with claims 3, 4, 5, 6, 7, 8 and 9 for the case of stereoscopic reproductions, that is, with only two images, in which the following are used: two image-reproducing elements by transparency, two overhead-projecting elements perpendicular to each other, a semi-transparent screen forming an angle of 45° with each of them and a single row of light sources for both eyes.

## Patentansprüche

1. System für die dreidimensionale Bildwiedergabe, das fähig ist, stereoskopische, dreidimensionale oder integrale Bilder für eine beliebige Anzahl von Beobachtern, unabhängig von deren Standort, wiederzugeben, ohne dass es notwendig wäre Brillen oder andere Vorrichtungen vor den Augen zu benutzen, das einen retroreflektierenden Bildschirm (11, 12, 13, 14, 15) aufweist, der die Reflexion in die gleiche Richtung und in die entgegengesetzte Strahlenbahn eines beliebigen zum Lichtstrahlenbündel gehörigen Strahl gewährleisten kann, ein Element, das die Lichtstrahlen nach ihrer Bewegungsrichtung (21, 22, 24, 25, 26, 28) trennen kann, ein Wiedergabegerät (31, 32) für zweidimensionale Bilder, ein Element (46-47, 471-472, 481-482, 491-492, 410, 4111-4112, 412, 4131-4132), das die verschiedenen zweidimensionalen Bilder zueinander diskriminieren kann, eine erste elektronische Vorrichtung (51), die fähig ist, die verschiedenen Bilder zu multiplexen und ein Synchronisierungssignal auszugeben, das das Bild erkennt, das jeweils zu einem bestimmten Zeitpunkt wiedergegeben wird, und eine zweite elektronische Vorrichtung (52), mit der das Synchronisierungssignal empfangen werden kann und das Diskriminierungselement durch dieses Signal gesteuert werden kann.

2. System für die dreidimensionale Bildwiedergabe nach Anspruch 1, bei dem der retroreflektierende Bildschirm aus einer großen Anzahl reflektierender Elemente besteht und bei dem jedes reflektierende Element aus drei flachen Spiegeln besteht, wobei jeweils zwei davon senkrecht zueinander verlaufen.

3. System für die dreidimensionale Bildwiedergabe nach Anspruch 2, bei dem eine halbtransparente Folie (21) als Trennelement verwendet wird.

4. System für die dreidimensionale Bildwiedergabe nach Anspruch 2, bei dem eine Folie aus doppelbrechendem Material und eine depolarisierende Folie (22) als Trennelement eingesetzt werden, wobei beide parallel zueinander und zu dem retroreflektierenden Bildschirm verlaufen.

5. System für die dreidimensionale Bildwiedergabe nach Anspruch 1, bei dem der retroreflektierende Bildschirm und das Trennsystem aus zwei gleichen Sektionen (12) bestehen, wobei jede dieser Sektionen aus einer großen Anzahl von auf der einen Seite sphärischen und konvexen Linsen und auf der anderen Seite flach ausgebildeten Linsen bestehen, wobei beide Sektionen auf der zuletzt genannten Seite sandwichartig mit einer flachen, durchsichtigen Folie (24) verbunden sind, die in deren Fokalebene angeordnet ist.

6. System für die dreidimensionale Bildwiedergabe nach Anspruch 5, bei dem eine oder beide Sektionen mit konvexen Mikrolinsen durch zwei Sektionen mit Linsen mit senkrecht zueinander verlaufenden Achsen ersetzt werden, wobei die konvexen Seiten einander gegenüberliegend angeordnet sind und miteinander in Berührung stehen und die gleichen Brennweiten wie die sphärische Mikrolinse aufweisen.

7. System für die dreidimensionale Bildwiedergabe ohne Vertikalparallaxe nach Anspruch 1, bei dem der retroreflektierende Bildschirm (13) und das Trennsystem aus einer großen Anzahl an reflektierenden Elementen bestehen und bei dem jedes reflektierende Element aus einem flachen Spiegel (131) und einer Sektion einer aus horizontalen Zylindern (25) bestehenden Spiegellinse besteht, wobei beide senkrecht zueinander verlaufen und die Beobachter sich nebeneinander befinden und nie hintereinander.

8. System für die dreidimensionale Bildwiedergabe ohne Vertikalparallaxe nach Anspruch 1, bei dem der retroreflektierende Bildschirm und das Trennsystem aus einer großen Anzahl von reflektierenden Elementen (14) bestehen und bei dem jedes reflektierende Element aus drei Oberflächen besteht, wobei die ersten beiden Flächen flache, senkrecht zueinander verlaufende Spiegel sind und die Dritte ein zylinderförmiger Spiegel (26) ist, und die Beobachter sich nebeneinander befinden und nie hintereinander.

9. System für die dreidimensionale Bildwiedergabe ohne Vertikalparallaxe nach Anspruch 1, bei dem der retroreflektierende Bildschirm und das Trennsystem aus zwei Sektionen (15) gleicher Linsen bestehen, wobei jede dieser Sektionen aus vertikal ausgerichteten Zylinderlinsen bestehen, die sandwichartig auf ihren flachen Seiten mit einer flachen durchsichtigen Folie (28) verbunden sind, die in ihrer Fokalebene angeordnet ist, wobei die Beobachter sich nebeneinander befinden und nie hintereinander.

10. System für die dreidimensionale Bildwiedergabe nach den Ansprüchen 3, 4, 5, 6, 7, 8 und 9, bei dem ein einziges Bildwiedergabegerät (31) verwendet wird, das das Licht durch Transparenz modulieren kann, wie ein Flüssigkristall.

11. System für die dreidimensionale Bildwiedergabe nach Anspruch 10, bei dem das Wiedergabegerät (31) durch Transparenz zwischen dem Trennelement (21) und dem retroreflektierenden Element (11) angeordnet wird.

12. System für die dreidimensionale Bildwiedergabe nach Anspruch 10, bei dem das Wiedergabegerät (31) durch Transparenz zwischen dem Beobachter und dem Trennelement (21) angeordnet wird.

13. System für die dreidimensionale Bildwiedergabe nach Anspruch 3, bei dem die Bilder in dem Wiedergabegerät durch Diffusion (32) wiedergegeben werden, zum Beispiel mit Hilfe einer Kathodenstrahlröhre, einem Plasmabildschirm, einer Leuchtdiodeneinheit, rückseitig beleuchtetem Flüssigkristall mit einem flachen Streulichtschirm oder Film- oder Fernsehprojektoren.

14. System für die dreidimensionale Bildwiedergabe nach den Ansprüchen 12 und 13, bei dem ein zweites retroreflektierendes Element E₁₁ hinzukommt, das senkrecht zum ersteren (11) angeordnet ist.

15. System für die dreidimensionale Bildwiedergabe nach Anspruch 10, bei dem das Element zur Diskriminierung der Bilder aus einer Lichtquelle und einer elektronischen Blende (471-472, 4111-4112, 4131-4132) besteht.

16. System für die dreidimensionale Bildwiedergabe nach Anspruch 10, bei dem das Element zur Diskriminierung der Bilder aus verschiedenen, nebeneinander angeordneten Lichtquellen (46-47, 410, 412) besteht.

17. System für die dreidimensionale Bildwiedergabe nach Anspruch 13, bei dem das Element zur Diskriminierung aus einem flachen Spiegel und einer elektronischen Blende (481-482) besteht.

18. System für die dreidimensionale Bildwiedergabe nach Anspruch 13, für stereoskopische Bildwiedergaben, bei dem das Element zur Diskriminierung aus zwei Polarisationsfiltern besteht, deren Polarisationsebenen (491-492) senkrecht zueinander verlaufen.

19. System für die dreidimensionale Bildwiedergabe nach den Ansprüchen 4, 7 und 8, bei dem als Element zur Diskriminierung mehrere nebeneinander angeordnete Lichtquellen verwendet werden, wobei diese über den Kopf jeder Beobachter (46-47, 410, 412) angeordnet sind.

20. System für die dreidimensionale Bildwiedergabe nach den Ansprüchen 4, 7 und 8, bei dem das Element zur Diskriminierung der Bilder, das jeweils über den Kopf der Beobachter angeordnet ist, aus einer Lichtquelle und einer elektronischen Blende (471-472, 4111-4112, 4131-4132) besteht.

21. System für die dreidimensionale Bildwiedergabe nach Anspruch 1, für stereoskopische Wiedergaben, bei denen die Anzahl der wiedergegebenen Bilder zwei beträgt.

22. System für die dreidimensionale Bildwiedergabe nach Anspruch 1, für dreidimensionale oder integrale Wiedergaben, bei denen die Anzahl der wiedergegebenen Bilder zehn oder mehrere Dutzend beträgt.

23. System für die dreidimensionale Bildwiedergabe nach Anspruch 21, bei dem ein erstes elektronisches Mittel (51) vorgesehen ist, das zwei Bilder multiplext und ein Synchronisierungssignal sendet, mit Information über das wiedergegebende Bild.

24. System für die dreidimensionale Bildwiedergabe nach Anspruch 22, bei dem ein erstes elektronisches Mittel (51) vorgesehen ist, das mehrere Bilder multiplext und an dem zweiten elektronischen Mittel (52) ein Synchronisierungssignal sendet, mit Information darüber, welches Bild wiedergegeben wird, wobei das zweite Mittel das Element zur Diskriminierung entsprechend dieser Information steuert.

25. System für die dreidimensionale Bildwiedergabe nach Anspruch 23, bei dem das zweite elektronische Mittel (52) dazu vorgesehen ist, die Information zu verarbeiten, die von einem Monitor über den Kopf (61) des Beobachters kommt und mit diesem Signal das diesem Beobachter entsprechende Bilddiskriminierungsgerät steuert.

26. System für die dreidimensionale Bildwiedergabe nach Anspruch 24, das so angeordnet ist, dass es Bilder mit einem Sichtwinkel wiedergibt, der nicht ausreicht um die gesamte Breite zu decken, die die Augen des Beobachters einsehen können, bei dem ein zweites elektronisches Mittel vorgesehen ist, das dazu vorgesehen ist, die Information zu verarbeiten, die von einem Monitor über den Kopf des Beobachters kommt und mit diesem Signal das diesem Beobachter entsprechende Bilddiskriminierungsgerät steuert.

27. System für die dreidimensionale Bildwiedergabe nach Anspruch 3, bei dem für jeden Beobachter eine andere halbtransparente Folie verwendet wird.

28. System für die dreidimensionale Bildwiedergabe nach Anspruch 3, bei dem eine einzige halbtransparente Folie gegenüber dem retroreflektierenden Bildschirm verwendet wird.

29. System für die dreidimensionale Bildwiedergabe nach den Ansprüchen 3 und 4, bei dem eine einzige halbtransparente Folie als eingeschobene Decke verwendet wird.

30. System für die dreidimensionale Bildwiedergabe nach den Ansprüchen 3, 4, 5, 6, 7, 8 und 9 für den Fall stereoskopischer Wiedergaben, das heißt, nur zwei Bilder, bei dem folgendes verwendet wird: zwei Bildwiedergabeelemente durch Transparenz, zwei Projektionselemente über den Kopf, die senkrecht zueinander angeordnet sind, ein halbtransparenter Bildschirm, der einen Winkel von 45° mit jedem dieser Elemente einschließt und zwei Reihen von Lichtquellen, jeweils eine pro Auge.

31. System für die dreidimensionale Bildwiedergabe nach den Ansprüchen 3, 4, 5, 6, 7, 8 und 9 für den Fall stereoskopischer Wiedergaben, das heißt, mit nur zwei Bildern, bei dem folgendes verwendet wird: zwei Bildwiedergabeelemente durch Transparenz, zwei Projektionselemente über den Kopf, die senkrecht zueinander angeordnet sind, ein halbtransparenter Bildschirm, der einen Winkel von 45° mit jedem dieser Elemente einschließt und eine einzige Reihe von Lichtquellen für beide Augen.

## Revendications

1. Système de reproduction d'images en trois dimensions, apte à reproduire des images stéréoscopiques, tridimensionnelles ou intégrales pour un nombre quelconque d'observateurs, quelque soit sa localisation, sans avoir besoin d'utiliser des lunettes ou tout autre dispositif devant ses yeux, comprenant un écran (11, 12, 13, 14, 15) rétroréfléchissant, pouvant garantir la réflexion dans la même direction et dans la même trajectoire opposée de tout rayon appartenant à n'importe quel faisceau de rayons lumineux, un élément pouvant séparer les rayons lumineux selon leur direction (21, 22, 24, 25, 26, 28) de déplacement, un reproducteur (31, 32) d'images bidimensionnelles, un élément (46-47, 471-472, 481-482, 491-492, 410, 4111-4112, 412, 4131-4132) pouvant discriminer les différentes images bidimensionnelles entre elles, un premier dispositif (51) électronique qui est apte à multiplexer les différentes images et émettre un signal de synchronisation qui identifie l'image qui est en train d'être reproduite à chaque instant et un deuxième dispositif (52) électronique qui est apte à recevoir le signal de synchronisation et commander l'élément de discrimination au moyen de cette dernière.

2. Système de reproduction d'images en trois dimensions selon la revendication 1, dans lequel l'écran (11) rétroréfléchissant est composé d'un grand nombre d'éléments réflecteurs et dans lequel chaque élément réflecteur est composé de trois miroirs plats, tous les deux de ceux-ci étant perpendiculaires entre eux.

3. Système de reproduction d'images en trois dimensions selon la revendication 2, dans lequel on utilise une lame (21) semi-transparente comme élément séparateur.

4. Système de reproduction d'images en trois dimensions selon la revendication 2, dans lequel une lame en matière biréfringente et une lame (22) dépolarisante sont utilisées comme élément séparateur, les deux étant parallèles entre elles et par rapport à l'écran rétroréflechissant.

5. Système de reproduction d'images en trois dimensions selon la revendication 1, dans lequel l'écran rétroréflechissant et le système séparateur sont composés de deux sections (12) identiques, chacune de ces sections étant composée d'un grand nombre de lentilles sphériques convergentes d'un côté, l'autre côté étant plat, les deux sections étant unies par le dernier côté, sous forme d'un sandwich, à une lame (24) plane translucide située sur son plan focal.

6. Système de reproduction d'images en trois dimensions selon la revendication 5, dans lequel une ou les deux sections de micro-lentilles convergentes sont remplacées par deux sections de lentilles avec leurs axes perpendiculaires entre eux, leurs côtés convexes étant en regard et en contact entre eux et avec les mêmes distances focales que la micro-lentille sphérique.

7. Système de reproduction d'images en trois dimensions sans parallaxe vertical selon la revendication 1, dans lequel l'écran (13) rétroréfléchissant et le système séparateur sont composés d'un grand nombre d'éléments réflecteurs, et dans lequel chaque élément réflecteur est composé d'un miroir (131) plat et une section de lentille spéculaire composée de cylindres (25) horizontaux, les deux étant perpendiculaires entre eux et les observateurs étant situés juxtaposés et jamais l'un derrière l'autre.

8. Système de reproduction d'images en trois dimensions sans parallaxe vertical selon la revendication 1, dans lequel l'écran rétroréfléchissant et le système séparateur sont composés d'un grand nombre d'éléments (14) réflecteurs et dans lequel chaque élément réflecteur est composé de trois surfaces, les deux premières étant deux miroirs plats perpendiculaires entre eux et la troisième étant un miroir (26) cylindrique, les observateurs étant situés juxtaposés et jamais l'un derrière l'autre.

9. Système de reproduction d'images en trois dimensions sans parallaxe vertical selon la revendication 1, dans lequel l'écran rétroréfléchissant et le système séparateur sont composés de deux sections (15) de lentilles identiques composées de lentilles cylindriques verticales unies sous forme d'un sandwich par leurs côtés plats à une lame (28) translucide plane située sur une distance focale, les observateurs étant situés juxtaposés et jamais l'un derrière l'autre.

10. Système de reproduction d'images en trois dimensions selon les revendications 3, 4, 5, 6, 7, 8 et 9, dans lequel on utilise un élément (31) unique reproducteur d'image, qui peut moduler la lumière par transparence, tel qu'un cristal liquide.

11. Système de reproduction d'images en trois dimensions selon la revendication 10, et dans lequel l'élément (31) reproducteur par transparence est situé entre l'élément (21) séparateur et l'élément (11) rétroréfléchissant.

12. Système de reproduction d'images en trois dimensions selon la revendication 10, dans lequel l'élément (31) reproducteur d'images par transparence est situé entre l'observateur et l'élément (21) séparateur.

13. Système de reproduction d'images en trois dimensions selon la revendication 3, dans lequel dans l'élément reproducteur, les images sont reproduites par diffusion (32), par exemple, au moyen d'un tube à rayons cathodiques, un écran plasma, une unité de diodes LED, cristal liquide rétro-illuminé avec un écran plat diffuseur ou des projecteurs de cinéma ou télévision.

14. Système de reproduction d'images en trois dimensions selon les revendications 12 et 13, dans lequel on ajoute un deuxième élément E₁₁ rétroréfléchissant perpendiculaire au premier (11).

15. Système de reproduction d'images en trois dimensions selon la revendication 10, dans lequel l'élément discriminateur d'images est une source lumineuse et un obturateur (471-472, 4111-4112, 4131-4132) électronique.

16. Système de reproduction d'images en trois dimensions selon la revendication 10, dans lequel l'élément discriminateur d'images ce sont diverses sources (46-47, 410, 412) lumineuses attenantes entre elles.

17. Système de reproduction d'images en trois dimensions selon la revendication 13, dans lequel l'élément discriminateur est un miroir plat et un obturateur (481-482) électronique.

18. Système de reproduction d'images en trois dimensions selon la revendication 13, pour des reproductions stéréoscopiques dans lequel l'élément discriminateur ce sont deux filtres de polarisation dont les plans (491-492) de polarisation sont perpendiculaires entre eux.

19. Système de reproduction d'images en trois dimensions selon les revendications 4, 7 et 8, dans lequel on utilise diverses sources lumineuses attenantes entre elles comme élément discriminateur, celles-ci étant situées sur la tête de chaque observateur (46-47, 410, 412).

20. Système de reproduction d'images en trois dimensions selon les revendications 4, 7 et 8, dans lequel l'élément discriminateur d'images situé sur la tête de chaque observateur est une source lumineuse et un obturateur (471-472, 4111-4112, 4131-4132) électronique.

21. Système de reproduction d'images en trois dimensions selon la revendication 1, pour des reproductions stéréoscopiques dans lesquelles le nombre d'images reproduites est deux.

22. Système de reproduction d'images en trois dimensions selon la revendication 1, pour des reproductions tridimensionnelles ou intégrales, dans lesquelles le nombre d'images reproduites est dix ou plusieurs dizaines.

23. Système de reproduction d'images en trois dimensions selon la revendication 21, dans lequel il existe un premier moyen (51) électronique qui multiplexe deux images et envoie un signal de synchronisation avec de l'information sur l'image qui est en train d'être reproduite.

24. Système de reproduction d'images en trois dimensions selon la revendication 22, dans lequel il existe un premier moyen (51) électronique qui multiplexe diverses images et envoie un signal de synchronisation avec de l'information sur l'image qui est en train d'être reproduite au deuxième moyen (52) électronique qui commande l'élément discriminateur selon cette information.

25. Système de reproduction d'images en trois dimensions selon la revendication 23, dans lequel le deuxième moyen (52) électronique est disposé pour traiter l'information provenant d'un moniteur de la tête (61) de l'observateur et avec ce signal il commande le discriminateur d'images correspondant à cet observateur.

26. Système de reproduction d'images en trois dimensions selon la revendication 24, qui est disposé pour reproduire des images avec un angle de vision qui est insuffisant pour couvrir toute la largeur que les yeux de l'observateur peuvent occuper, dans lequel il existe un deuxième moyen électronique qui est disposé pour traiter l'information provenant d'un moniteur de la tête de l'observateur et commander avec ce signal le discriminateur d'images correspondant à cet observateur.

27. Système de reproduction d'images en trois dimensions selon la revendication 3, dans lequel on utilise une lame semi-transparente différente pour chaque observateur.

28. Système de reproduction d'images en trois dimensions selon la revendication 3, dans lequel on utilise une seule lame semi-transparente en face de l'écran rétroréfléchissant.

29. Système de reproduction d'images en trois dimensions selon les revendications 3 et 4, dans lequel on utilise une seule lame semi-transparente comme plafond suspendu.

30. Système de reproduction d'images en trois dimensions selon les revendications 3, 4, 5, 6, 7, 8 et 9 pour le cas de reproductions stéréoscopiques, c'est à dire, seulement deux images, dans lequel on utilise ce qui suit : deux éléments reproducteurs d'images par transparence, deux éléments de projection sur la tête perpendiculaires entre eux, un écran semi-transparent qui forme un angle de 45° par rapport à chacun d'eux et deux files de sources lumineuses, une pour chaque oeil.

31. Système de reproduction d'images en trois dimensions selon les revendications 3, 4, 5, 6, 7, 8 et 9 pour le cas de reproductions stéréoscopiques, c'est à dire, seulement deux images, dans lequel on utilise ce qui suit : deux éléments reproducteurs d'images par transparence, deux éléments de projection sur la tête perpendiculaires entre eux, un écran semi-transparent qui forme un angle de 45° par rapport à chacun d'eux et une seule file de sources lumineuses pour les deux yeux.
